(19) Europäisches Patentamt
European Patent Office
Office européen des brevets

(11) EP 2 633 901 A1

(12) **EUROPEAN PATENT APPLICATION**
published in accordance with Art. 153(4) EPC

(43) Date of publication:
**04.09.2013 Bulletin 2013/36**

(21) Application number: **11836162.5**

(22) Date of filing: **21.10.2011**

(51) Int Cl.:
***B01D 69/00*** *(2006.01)* ***B01D 69/10*** *(2006.01)*
***B01D 69/12*** *(2006.01)* ***B01D 71/82*** *(2006.01)*

(86) International application number:
**PCT/JP2011/074306**

(87) International publication number:
**WO 2012/057028 (03.05.2012 Gazette 2012/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2010 JP 2010292164**
**26.10.2010 JP 2010239329**

(71) Applicant: **Toray Industries, Inc.**
**Tokyo 103-8666 (JP)**

(72) Inventors:
- **HIROZAWA, Hiroho**
  **Otsu-shi, Shiga 520-8558 (JP)**
- **KOIWA, Masakazu**
  **Otsu-shi, Shiga 520-8558 (JP)**
- **TAKAGI, Kentaro**
  **Otsu-shi, Shiga 520-8558 (JP)**
- **SUZUKI, Yutaro**
  **Otsu-shi, Shiga 520-8558 (JP)**
- **OTO, Katsufumi**
  **Otsu-shi, Shiga 520-8558 (JP)**
- **KIMURA, Masahiro**
  **Otsu-shi, Shiga 520-8558 (JP)**

(74) Representative: **Hoefer & Partner**
**Pilgersheimer Straße 20**
**81543 München (DE)**

(54) **SEPARATION MEMBRANE, SEPARATION MEMBRANE ELEMENT AND SEPARATION MEMBRANE PRODUCTION METHOD**

(57) A separation membrane containing hydrophilic molecules and having, as formed on at least one surface of a feed side and a permeate side thereof, a height difference of from 80 μm to 2000 μm, in which a weight of the hydrophilic molecules in a bone-dry separation membrane is from 0.1 % to 40% based on a weight of the bone-dry separation membrane from which the weight of the hydrophilic molecules has been subtracted.

*Fig. 1*

1
H

EP 2 633 901 A1

## Description

TECHNICAL FIELD

The present invention relates to a separation membrane and a separation membrane element to be used for separating components contained in fluid such as liquid or vapor.

BACKGROUND ART

Various methods are known for separating components contained in fluid such as liquid or vapor. For example, a case of a technique for removing ionic substances contained in seawater, brine water or the like is described, for which, recently, use of a separation method with a separation membrane element has become expanding as a process for energy saving and resources saving. The separation membrane to be used in the separation method with a separation membrane element includes microfiltration membranes, ultrafiltration membranes, nanofiltration membranes, reverse osmosis membranes, forward osmosis membranes and others in point of the pore size and the separation function thereof; and these membranes are used, for example, for obtaining drinkable water from seawater, brine water or also from water containing harmful materials or the like, as well as for production of ultrapure water for industrial use, and also for drainage treatment, recovery of valuables, etc., and can be used suitably for different purposes depending on the components intended to be separated therewith and on the separation performance thereof.

Separation membranes are all alike in that a raw fluid is fed to one surface of the separation membrane and a permeated fluid is obtained through the other surface thereof. The separation membrane element may be configured by binding up a large number of sheets of a separation membrane element of various shapes to provide a large membrane area so that a large amount of the permeated fluid can be obtained per the unit element. Various types of such elements are produced, including those of spiral type, hollow-fiber type, plate-and-flame type, rotating flat-membrane type and flat-membrane integration type, in accordance with the intended use applications and purposes.

For example, a fluid separation membrane element for use for reverse osmosis filtration is described as one example. As the separation membrane element member in this, widely used is a spiral-type separation membrane element which comprises members of a feed-side spacer for feeding a raw fluid to the surface the separation membrane, a separation membrane for separating the components contained in the raw fluid, and a permeate-side spacer for leading the permeated fluid that has passed through the separation membrane and has been separated from the fed fluid to the center tube, and in which those members are wound up around the center tube, as capable of taking out a large amount of the permeated fluid under pressure applied to the raw fluid.

Regarding the members of the spiral-type reverse osmosis separation membrane element, a polymer-made net is mainly used for forming the passages for the feed side fluid as the feed-side spacer, and a separation membrane comprising: a separation function layer which includes a crosslinked polymer such as polyamide; a porous resin layer which includes a polymer such as polysulfone; and nonwoven fabric which includes polymer such as polyethylene terephthalate as laminated in this order from the feed side toward the permeate side is used, and as the permeate-side spacer, a woven-fabric member that is called tricot and has finer meshes than those of the feed side spacer is used for the purpose of forming the passages on the permeate side while preventing the membrane from falling into the center tube.

Recently, with the increasing demand for reducing the cost in water production with a separation membrane element, there has increased the demand for enhancing the performance of membrane elements. For enhancing the separation performance of a separation membrane element and for increasing the permeate amount per unit time, it has heretofore been proposed to enhance the performance of the constitutive spacers and separation element members. For example, Patent Document 1 proposes use of concavoconvex-embossed sheets as the permeate-side spacer. Patent Document 2 proposes use of a flat membrane having concavoconvex shapes formed on the feed side surface thereof and having hollow passages inside it, with no use of a substrate therein. Patent Document 3 proposes an element that comprises a sheet-like separation membrane provided with a porous support having concavoconvex shapes and a separation active layer, but does not have a feed side spacer such as net or the like and a permeate-side spacer such as tricot or the like. Patent Documents 4 and 5 disclose incorporation of sugar and a metal salt of an organic acid or a metal salt of an inorganic acid into a separation membrane in order that the separation membrane can still exerts the separation function thereof even when it is dried.

BACKGROUND ART DOCUMENT

PATENT DOCUMENT

Patent Document 1: JP-A-2006-247453

Patent Document 2: JP-A-11-114381 1

Patent Document 3: JP-A-2010-99590

Patent Document 4: JP-A-2000-117074

Patent Document 5: JP-A-2008-93543

SUMMARY OF THE INVENTION

PROBLEMS THAT THE INVENTION IS TO SOLVE

However, the above-mentioned separation membrane elements could not be said to be sufficient in point of the performance increase, especially in point of the stability performance in long-term use.

Accordingly, it is an object of the present invention to provide a separation membrane and a separation membrane element effective for enhancing the separation and removal performance of a separation membrane element, for enhancing the separation membrane element performance of increasing the amount of permeated fluid per unit time, and for enhancing the stable performance of the membrane.

MEANS FOR SOLVING THE PROBLEMS

For attaining the above-mentioned object, the invention provides the following constitution.

(1) A separation membrane containing hydrophilic molecules and having, as formed on at least one surface of a feed side and a permeate side thereof, a height difference of from 80 $\mu$m to 2000 $\mu$m, in which a weight of the hydrophilic molecules in a bone-dry separation membrane is from 0.1 % to 40% based on a weight of the bone-dry separation membrane from which the weight of the hydrophilic molecules has been subtracted.

(2) A method for producing a separation membrane, the method comprising:

a step of imparting a height difference of from 80 $\mu$m to 2000 $\mu$m to at least one surface of a feed side and a permeate side of a separation membrane; and
a step of bringing the separation membrane into contact with hydrophilic molecules so that a weight of the hydrophilic molecules in a bone-dry separation membrane is from 0.1 % to 40% based on a weight of the bone-dry separation membrane from which the weight of the hydrophilic molecules has been subtracted.

BRIEF DESCRIPTION OF THE DRAWINGS

[Fig. 1] Fig. 1 is a cross-sectional view showing one example of a separation membrane having a height difference, which is one embodiment of the present invention.
[Fig. 2] Fig. 2 is a cross-sectional view showing another example of a separation membrane having a height difference.
[Fig. 3] Fig. 3 is a cross-sectional view showing still another example of a separation membrane having a height difference.
[Fig. 4] Fig. 4 is a cross-sectional view showing still another example of a separation membrane having a height difference.
[Fig. 5] Fig. 5 is a cross-sectional view showing still another example of a separation membrane having a height difference.
[Fig. 6] Fig. 6 is a cross-sectional view showing still another example of a separation membrane having a height difference.
[Fig. 7] Fig. 7 is a cross-sectional view showing still another example of a separation membrane having a height difference.
[Fig. 8] Fig. 8 is a cross-sectional view showing still another example of a separation membrane having a height difference.

MODE FOR CARRYING OUT THE INVENTION

Embodiments of the invention are described in detail hereinunder.

1. Outline of Separation Membrane

The separation membrane is a membrane that can separate the components from the fluid having been fed to the surface of the separation membrane, thereby obtaining a permeated fluid that has passed through the separation membrane. The separation membrane may comprise, for example, a separation function layer, a porous supporting layer and a substrate. As the separation function layer, for example, preferably used is a crosslinked polymer from the viewpoint of the pore size control and the durability. From the viewpoint of the separation performance thereof for components, preferably used is a separation function layer formed through polycondensation of a polyfunctional amine and a polyfunctional acid halide, or an organic/inorganic hybrid function layer or the like formed on a porous supporting layer.

A layer comprising, as the main ingredient thereof, cellulose, polyvinylidene fluoride, polyether sulfone or polysulfone and having both a separation function and a support function may be provided. In other words, the separation function and the porous supporting function may be realized by a single layer. The layer of the type falls within the scope of the separation function layer. Namely, "separation function layer" indicates a layer having at least a separation function.

In this description, the wording "X contains Y as the main ingredient thereof" means that the content of Y in X is 50% by weight or more, 70% by weight or more, 80% by weight or more, 90% by weight or more or 95% by weight or more. In case where the composition contains multiple components corresponding to Y, it is only necessary that the total amount of those multiple components satisfies the above-mentioned range.

In this description, "supply-side face" means the face on the side on which a raw fluid is applied of the two surface of the separation membrane. "Permeate-side face" means the face opposite thereto. In the separation membrane comprising a substrate and a separation function layer, in general, the face on the side of the separation function layer is the supply-side face, and the face on the side of the substrate is the permeate-side face.

2. Separation Function Layer

Not specifically defined, the thickness of the separation function layer is preferably from 5 to 3000 nm from the viewpoint of the separation performance and the permeation performance thereof. In particular, in the reverse osmosis membrane, the forward osmosis membrane or the nanofiltration membrane, the thickness is preferably from 5 to 300 nm.

The thickness of the separation function layer may be measured according to an already-existing separation membrane thickness measuring method. For example, after embedded with resin, the separation membrane is cut into an ultrathin section, this is stained and then observed with a transmission electron microscope. In one typical measurement method where the separation function layer has a pleated structure, the layer thickness of one pleat is measured at intervals of 50 nm in the direction of the length of the cross section of the pleated structure positioned above the porous supporting layer, and 20 pleats are measured in the same manner, and the data are averaged.

<Polyamide Separation Function Layer>

The separation function layer may be a polyamide membrane that contains polyamide as the main ingredient thereof. The polyamide membrane may be formed through interfacial polycondensation of a polyfunctional amine and a polyfunctional acid halide. In this, preferably, at least one of the polyfunctional amine or the polyfunctional acid halide contains a trifunctional or more polyfunctional compound.

The polyfunctional amine is an amine having at least two primary amino groups and/or secondary amino groups in one molecule, in which at least one amino group is a primary amino group. For example, there are mentioned aromatic polyfunctional amines in which two amino groups bond to the benzene ring in any positional relation of an ortho-position, meta-position or para-position, such as phenylenediamine, xylylenediamine, 1,3,5-triaminobenzene, 1,2,4-triaminobenzene, 3,5-diaminobenzoic acid, 3-aminobenzylamine, 4-aminobenzylamine, etc.; aliphatic polyfunctional amines such as ethylenediamine, propylenediamine, etc.; alicyclic polyfunctional amines such as 1,2-diaminocyclohexane, 1,4-diaminocyclohexane, 4-aminopiperidine, 4-aminoethylpiperazine, etc. In consideration of the selective separability, permeability and heat resistance of the membrane, the polyfunctional amine is preferably an aromatic polyfunctional amine having from 2 to 4 primary amino groups and/or secondary amino groups in one molecule. As the polyfunctional aromatic amine of the type, preferably used here is m-phenylenediamine, p-phenylenediamine or 1,3,5-triaminobenzene. Above all, more preferred is m-phenylenediamine (hereinafter referred to as m-PDA) from the viewpoint of the availability and the handleability thereof. One alone or two or more different types of polyfunctional amines may be used either singly or as combined. In case where two or more different types of polyfunctional amines are used, the above-mentioned amines may be used as combined together, or the above-mentioned amine may be combined with any other amine having at least two secondary amino groups in one molecule. As the amine having at least two secondary amino groups in one molecule, for example, there may be mentioned piperazine, 1,3-bispiperidylpropane, etc.

The polyfunctional acid halide is an acid halide having at least two halogenocarbonyl groups in one molecule. For example, as trifunctional acid halides, there are mentioned trimesic acid chloride, 1,3,5-cyclohexanetricarboxylic acid trichloride, 1,2,4-cyclobutanetricarboxylic acid trichloride, etc. As bifunctional acid halides, there are mentioned aromatic bifunctional acid halides such as biphenyldicarboxylic acid dichloride, azobenzenedicarboxylic acid dichloride, terephthalic acid chloride, isophthalic acid chloride, naphthalenedicarboxylic acid chloride, etc.; aliphatic bifunctional acid halides such as adipoyl chloride, sebacoyl chloride, etc.; alicyclic bifunctional acid halides such as cyclopentanedicarboxylic acid dichloride, cyclohexanedicarboxylic acid dichloride, tetrahydrofurandicarboxylic acid dichloride, etc. In consideration of the reactivity thereof with a polyfunctional amine, the polyfunctional acid halide is preferably a polyfunctional acid chloride. In consideration of the selective separability and the heat resistance of the membrane, preferably, the polyfunctional acid halide is a polyfunctional aromatic acid chloride having from 2 to 4 chlorocarbonyl groups in one molecule thereof. In particular, more preferred is trimesic acid chloride from the viewpoint of the availability and the handleability thereof. One alone or two or more different types of these polyfunctional acid halides may be used here either singly or as combined simultaneously.

Any known method is employable for interfacial polycondensation of the polyfunctional amine and the polyfunctional acid halide. For example, an aqueous solution of a polyfunctional amine is applied onto a porous supporting layer and any excessive aqueous amine solution is removed with an air knife. Subsequently, an organic solvent solution containing a polyfunctional acid halide is applied thereto to form a polyamide separation function layer. The organic solvent to be in the solution containing the polyfunctional acid halide is preferably one immiscible with water and capable of dissolving the polyfunctional acid halide not destroying the porous supporting layer. The solvent may be any one inactive against polyfunctional amine compounds and polyfunctional acid halide compounds. Preferred examples include hydrocarbon compounds such as n-hexane, n-octane and n-decane.

<Organic-Inorganic Hybrid Separation Function Layer>

Further, the separation function layer may have an organic-inorganic hybrid structure with an Si element or the like. The separation membrane having the separation function layer of the type is referred to as an organic-inorganic hybrid membrane. The organic-inorganic hybrid membrane is excellent in formability and chemical resistance. The composition of the separation function layer having such an organic-inorganic hybrid structure is not specifically defined. The separation function layer may contain, for example, a silicon compound (A) with an ethylenic unsaturated group-having reactive group and a hydrolysable group directly bonding to the silicon atom therein, as well as any other ethylenic unsaturated group-having compound (B) than the compound (A). Specifically, the separation function layer may contain a condensate of the hydrolysable group of the compound (A) and a polymer of the ethylenic unsaturated group of the compound (A) and/or the compound (B). Namely, the separation function layer may contain at least one polymer of the following:

a polymer formed through condensation and/or polymerization of the compound (A) alone;
a polymer formed through polymerization of the compound (B) alone; and
a copolymer of the compound (A) and the compound (B).
The polymer includes a condensate. In the copolymer of the compound (A) and the compound (B), the compound (A) may be condensed via the hydrolysable group therein.

In the separation function layer, the content of the compound (A) is preferably 10% by weight or more, more preferably from 20% by weight to 50% by weight. In the separation function layer, the content of the compound (B) is preferably 90% by weight or less, more preferably from 50% by weight to 80% by weight. The ratio by weight of compound (A)/compound (B) may be from 1/9 to 1/1. Within the range, the polycondensate contained in the separation function layer may secure a relatively high crosslinking degree and, therefore during filtration through the membrane, the separated components could be prevented from being released from the separation function layer and, as a result, the separation membrane can realize stable filtration performance.

The compound (A), the compound (B) and other compounds may form polymers (including condensates) and the like compounds. Accordingly, for example, when the "content of the compound (A) in the separation function layer" is discussed here, the compound (A) shall contain the amount of the components derived from the compound (A) in the polycondensate. The same shall apply also to the compound (B) and to the other compounds.

The separation function layer does not have any other ethylenic unsaturated group-having reactive group than the compound (A) therein, but may contain the components derived from a silicon compound (C) having a hydrolysable group. Examples of the compound (C) of the type will be described hereinunder. The compound (C) may be contained as a condensate of the compound (C) alone, or may be contained as a condensate with the polymer of the compound (A) and the compound (B).

First described is the compound (A).

In the compound (A), the reactive group having an ethylenic unsaturated group directly bonds to the silicon atom. The reactive group of the type includes a vinyl group, an allyl group, a methacryloxymethyl group, a methacryloxypropyl group, an acryloxyethyl group, an acryloxypropyl group, a styryl group. From the viewpoint of the polymerizability thereof, preferred are a methacryloxypropyl group, an acryloxypropyl group and a styryl group.

Via the process where the hydrolysable group directly bonding to the silicon atom in the compound (A) changes to a hydroxyl group, the molecules of the compound (A) bond to each other via a siloxane bonding therebetween to provide a condensate of the compound (A).

The hydrolysable group in the compound (A) includes functional groups such as an alkoxy group, an alkenyloxy group, a carboxyl group, a ketoxime group, an aminohydroxy group, a halogen atom, an isocyanate group, etc. The alkoxy group is preferably one having from 1 to 10 carbon atoms, more preferably having 1 or 2 carbon atoms. The alkenyloxy group is preferably one having from 2 to 10 carbon atoms, more preferably from 2 to 4 carbon atoms, and even more preferably having 3 carbon atoms. The carboxyl group is preferably one having from 2 to 10 carbon atoms, more preferably one having two carbon atoms, or that is, an acetoxyl group. The ketoxime group includes a methylethylketoxime group, a dimethylketoxime group, a diethylketoxime group. The aminohydroxy group is such that the amino group bonds to the silicon atom via the oxygen atom. The group of the type includes a dimethylaminohydroxy group, and a methylethylaminohydroxyl group. As the halogen atom, preferably used is a chlorine atom.

In forming the separation function layer, also usable is a silicon compound in which the above-mentioned hydrolysable group has partly hydrolyzed to obtain a silanol structure. Also usable is a polymer of two or more silicon compounds, in which a part of the hydrolysable group has hydrolyzed, condensed and polymerized to such a degree that the resulting polymer does not form a crosslinked structure.

As the silicon compound (A), preferred are those represented by the following formula (a):

$$Si(R^1)_m(R^2)_n(R^3)_{4-m-n} \qquad (a)$$

($R^1$ represents a reactive group containing an ethylenic unsaturated group. $R^2$ represents any of an alkoxy group, an alkenyloxy group, a carboxy group, a ketoxime group, a halogen atom or an isocyanate group. $R^3$ represents H or an alkyl group. m and n each are an integer satisfying $m + n \leq 4$, and satisfying $m \geq 1$ and $n \geq 1$. In $R^1$, $R^2$ and $R^3$, when two or more functional groups bond to the silicon atom, they may be the same or different.)

$R^1$ is a reactive group containing an ethylenic unsaturated group, and is as described above.

$R^2$ is a hydrolysable group, and is as described above. The carbon number of the alkyl group to be $R^3$ is preferably from 1 to 10, more preferably 1 or 2.

The hydrolysable group is preferably an alkoxy group. When the hydrolysable group is an alkoxy group, the reaction liquid to be prepared in forming the separation function layer can be viscous.

Examples of the silicon compound (A) include vinyltrimethoxysilane, vinyltriethoxysilane, styryltrimethoxysilane, methacryloxypropylmethyldimethoxysilane, methacryloxypropyltrimethoxysilane, methacryloxypropylmethyldiethoxysilane, methacryloxypropyltriethoxysilane, and acryloxypropyltrimethoxysilane.

In addition to the compound (A), also usable as combined is a silicon compound (C) not having a reactive group with an ethylenic unsaturated group but having a hydrolysable group. For the compound (C), there are mentioned the compounds represented by the general formula (a) where m is zero. Examples of the compound include tetramethoxysilane, tetramethoxysilane, methyltrimethoxysilane, and methyltriethoxysilane.

Next described is the compound (B) having an ethylenic unsaturated group, except for the silicon compound (A).

The ethylenic unsaturated group has the ability of addition polymerization. Examples of the compound include ethylene, propylene, methacrylic acid, acrylic acid, styrene and their derivatives.

Preferably, the compound is an alkali-soluble compound having an acid group so as to increase the selective permeability for water of the separation membrane and to increase the salt blocking ratio thereof when the separation membrane is used for separation of aqueous solutions.

Preferred structures of the acid include a carboxylic acid, a phosphonic acid, a phosphoric acid and a sulfonic acid; and regarding the structures of those acids, the acid may exist in any state of a free acid, an ester compound or a metal salt. The compound having at least one ethylenic unsaturated group may contain two or more acids, but especially preferred is a compound having one or two acid groups.

Of the above-mentioned compounds having at least one ethylenic unsaturated group, examples of those having a carboxylic acid group include the followings: maleic acid, maleic anhydride, acrylic acid, methacrylic acid, 2-(hydroxymethyl)acrylic acid, 4-(meth)acryloyloxyethyltrimellitic acid and its corresponding anhydride, 10-methacryloyloxydecylmalonic acid, N-(2-hydroxy-3-methacryloyloxypropyl)-N-phenylglycine and 4-vinylbenzoic acid.

Of the above-mentioned compounds having at least one ethylenic unsaturated group, those having a phosphonic acid group include vinylphosphonic acid, 4-vinylphenylphosphonic acid, 4-vinylbenzylphosphonic acid, 2-methacryloyloxyethylphosphonic acid, 2-methacrylamidoethylphosphonic acid, 4-methacrylamide-4-methylphenylphosphonic acid, 2-[4-(dihydroxyphosphoryl)-2-oxabutyl]acrylic acid and 2,4,6-trimethylphenyl 2-[2-dihydroxyphosphoryl)ethoxymethyl] acrylate.

Of the above-mentioned compounds having at least one ethylenic unsaturated group, phosphate ester compounds include 2-methacryloyloxypropyl monohydrogenphosphate and 2-methacryloyloxypropyl dihydrogenphosphate, 2-methacryloyloxyethyl monohydrogenphosphate and 2-methacryloyloxyethyl dihydrogenphosphate, 2-methacryloyloxyethylphenyl monohydrogenphosphate, dipentaerythritol pentamethacryloyloxyphosphate, 10-methacryloyloxydecyl dihydrogenphosphate, dipentaerythritol pentamethacryloyloxyphosphate, mono(1-acryloyl-piperidin-4-yl) phosphate, 6-(methacrylamide)hexyl dihydrogenphosphate as well as 1,3-bis(N-acryloyl-N-propylamino)propan-2-yl dihydrogenphosphate.

Of the above-mentioned compounds having at least one ethylenic unsaturated group, those having a sulfonic acid group include vinylsulfonic acid, 4-vinylphenylsulfonic acid or 3-(methacrylamide)propylsulfonic acid.

Next described is a method for forming the organic-inorganic hybrid separation function layer on the porous supporting layer. The separation membrane of the invention is not limited to the production method and to the formation method for the layers described in this text.

In forming the separation function layer, a reaction liquid containing a compound having at least one ethylenic unsaturated group and a polymerization initiator in addition to the compound (A) therein can be used. Specifically, the separation function layer can be formed by applying the reaction liquid on a porous membrane, then condensing the hydrolysable group and polymerizing the ethylenic unsaturated group, whereby the compounds are converted into a polymer. In case where the compound (A) is condensed alone, the crosslinking chain bonding centers at the silicon atom, and therefore the density difference between the part around the silicon atom and the part spaced from the silicon atom would increase. As a result, the pore size in the separation function layer tends to be uneven. On the other hand, when the compound (B) and the compound (A) are copolymerized in addition to the polymerization and the crosslinking of the compound (A) itself, the crosslinking point derived from the condensation of the hydrolysable group and the crosslinking point derived from the polymerization of the ethylenic unsaturated group could be suitably dispersed. When the crosslinking points are dispersed in that manner, then the pore size in the separation membrane could be uniform. As a result, a good balance of permeation and removal through the separation membrane can be realized. The compound having at least one ethylenic unsaturated group is converted into a polymer having a high molecular weight and therefore hardly dissolves out of the membrane in use, and the separation membrane is prevented from being worsened.

The content of the compound (A) in the separation function layer is preferably 10 parts by weight or more relative to 100 parts by weight of the solid content in the reaction liquid, more preferably from 20 parts by weight to 50 parts by weight. The solid content in the reaction liquid includes, of all the components contained in the reaction liquid, the components to be finally contained as the separation function layer in the obtained separation membrane, from which the solvent and other volatile components such as water, alcohol and the like formed in condensation are removed. When the amount of the compound (A) is small, the crosslinking degree would be low and there would be a risk of dissolution of the components of the separation function layer during filtration through the membrane to worsen the separation performance of the membrane.

Preferably, the content of the compound (B) is 90 parts by weight or less relative to 100 parts by weight of the solid content contained in the reaction liquid, more preferably from 50 parts by weight to 80 parts by weight. When the content of the compound (B) falls within the range, the crosslinking degree of the obtained separation function layer could be high, and the membrane secures stable filtration therethrough with no risk of dissolution of the separation function layer.

Next described is the step of forming the separation function layer having on the porous supporting layer.

The separation function layer can be formed according to a process comprising: a step of applying a reaction liquid containing the compound (A) and the compound (B) onto a substrate; a step of removing the solvent; a step of polymerizing h ethylenic unsaturated group; and a step of condensing the hydrolysable group that are to be carried out in this order. During the step of polymerizing the ethylenic unsaturated group, the hydrolysable group may be condensed at the same time.

First, a reaction liquid containing the compound (A) and the compound (B) is brought into contact with the porous supporting layer. The reaction liquid is generally a solution containing a solvent. Not specifically defined, the solvent may be any one capable of dissolving the compound (A), the compound (B) and an optional component, polymerization initiator, not damaging the porous supporting layer. Water may be added to the reaction liquid in an amount of from 1 to 10 molar times the molar number of the compound (A), preferably from 1 to 5 molar times relative to the molar number of the compound (A), along with an inorganic acid or an organic acid added thereto to thereby promote the hydrolysis of the compound (A).

The solvent of the reaction liquid is preferably water, an alcohol-type organic solvent, an ether-type organic solvent, a ketone-type organic solvent or their mixture. For example, as the alcohol-type solvent, there are mentioned methanol, ethoxymethanol, ethanol, propanol, butanol, amyl alcohol, cyclohexanol, methylcyclohexanol, ethylene glycol monomethyl ether (2-methoxyethanol), ethylene glycol monoaceto ester, diethylene glycol monomethyl ether, diethylene glycol monoacetate, propylene glycol monoethyl ether, propylene glycol monoacetate, dipropylene glycol monoethyl ether, methoxybutanol, etc. As the ether-type organic solvent, there are mentioned methylal, diethyl ether, dipropyl ether, dibutyl ether, diamyl ether, dimethylacetal, dihexyl ether, trioxane, dioxane, etc. As the ketone-type organic solvent, there are mentioned acetone, methyl ethyl ketone, methyl propyl ketone, methyl isobutyl ketone, methyl amyl ketone, methyl cyclohexyl ketone, diethyl ketone, ethyl butyl ketone, trimethylnonanone, acetonitrileacetone, dimethyl oxide, phorone, cyclohexanone, diacetone alcohol, etc. The amount of the solvent to be added to the reaction liquid is preferably from 50 to 99 parts by weight, more preferably from 80 to 99 parts by weight relative to 100 parts by weight of the solid content contained in the reaction liquid. When the amount of the solvent is too large, then there may often occur defects in the membrane; but when it is too small, then the water permeability of the separation membrane may tend to lower.

Preferably, the porous supporting layer and the reaction liquid are kept in contact with each other by uniformly and continuously applying the reaction liquid onto the porous supporting layer. Specifically, for example, there is mentioned a method where the reaction liquid is applied onto the porous supporting layer by the use of a coating apparatus such as a spin coater, a wire war, a flow coater, a die coater, a roll coater, a spray, etc. Also mentioned is a method of immersing the porous supporting layer in the reaction liquid.

In the case of immersion, the contact time between the porous supporting layer and the reaction liquid is preferably within a range of from 0.5 to 10 minutes, more preferably within a range of from 1 to 3 minutes. After the reaction liquid has been brought into contact with the porous supporting layer, preferably, the porous supporting layer is processed for complete liquid removal therefrom so that no liquid drop may remain on the layer. Sufficient liquid removal prevents surface defects to be caused by some liquid drops remaining on the surface, thereby preventing the membrane performance from worsening. For liquid removal, there may be employed a method where the porous supporting layer after kept in contact with the reaction liquid is hung vertically to thereby make the excessive reaction liquid spontaneously drop down, or a method of spraying a nitrogen flow or the like onto the layer via an air nozzle to thereby forcedly remove the excessive liquid. After the liquid removal, the membrane surface may be dried to further remove a part of the solvent in the reaction liquid.

The step of condensing the hydrolysable group of silicon is carried out through heat treatment after bringing the reaction liquid into contact with the porous supporting layer. The heating temperature in this case is required to be lower than the temperature at which the porous supporting layer is melted to decrease the performance thereof as a separation membrane. In order to progress the condensation reaction rapidly, the heating is preferably carried out generally at 0°C or higher, and more preferably at 20°C or higher. In addition, the reaction temperature mentioned above is preferably 1505°C or lower, and more preferably 100°C or lower. A reaction temperature of 0°C or higher progresses the hydrolysis and the condensation reaction rapidly, whereas a reaction temperature of 150°C or lower makes it easier to control the hydrolysis and the condensation reaction. In addition, the addition of a catalyst for promoting the hydrolysis or the condensation allows the reaction to be progressed at lower temperatures. Furthermore, the heating condition and the humidity condition are selected to provide the separation function layer with pores, in such a way that the condensation reaction can be carried out appropriately.

As the method for the polymerization of the ethylenic unsaturated group the compound (A) and the compound (B), the polymerization can be carried out by heat treatment, electromagnetic wave irradiation, electron beam irradiation, or plasma irradiation. The electromagnetic wave herein includes infrared rays, ultraviolet rays, X rays, and $\gamma$ rays. While an optimum selection of the polymerization method may be made appropriately, polymerization by electromagnetic wave irradiation is preferable in terms of the running cost, the productivity, etc. Polymerization by infrared ray irradiation or ultraviolet ray irradiation is more preferable among the electromagnetic waves in terms of convenience. In the case of actually carrying out polymerization with the use of infrared rays or ultraviolet rays, these light sources do not have to selectively generate only light rays in these wavelength ranges, and it is enough for the light sources to generate light rays including electromagnetic rays in these wavelength ranges. However, the strength of these electromagnetic waves is preferably higher as compared with electromagnetic waves in other wavelength ranges, in terms of the ability to shorten the polymerization time and to control the polymerization conditions.

The electromagnetic waves can be generated from a halogen lamp, a xenon lamp, a UV lamp, an excimer lamp, a metal halide lamp, a rare gas fluorescent lamp, a mercury lamp, etc. While the energy of the electromagnetic waves is not particularly limited as long as polymerization can be carried out, above all, short-wavelength ultraviolet rays with a high degree of efficiency have high thin film forming properties. Such ultraviolet rays can be generated by low pressure mercury lamps and excimer laser lamps. The thickness and the configuration of the separation function layer may vary significantly depending also on the respective polymerization conditions, and may vary significantly depending on the wavelength and the intensity of the electromagnetic waves, the distance to the object to be irradiated, and the processing time, in the case of polymerization with electromagnetic waves. Therefore, these conductions need to be appropriately optimized.

It is preferable to add a polymerization initiator, a polymerization promoter, etc., in the formation of the separation function layer for the purpose of increasing the polymerization rate. The polymerization initiator and the polymerization promoter herein are not particularly limited, and are appropriately selected according to the structures of the compounds used, the polymerization approach, etc.

Examples of the polymerization initiator are given below. Examples of the initiator for the polymerization with electromagnetic waves include benzoin ether, dialkyl benzil ketal, dialkoxyacetophenone, acylphosphine oxide or bisacylphosphine oxide, a-diketones (for example, 9,10-phenanthrene quinone), diacetyl quinone, furylquinone, anisylquinone, 4,4'-dichlorobenzylquinone and 4,4'-dialkoxybenzylquinone, and camphor quinone. Examples of the initiator for the polymerization with heat include azo compounds (for example, 2,2'-azobis(isobutyronitrile) (AIBN) or azobis-(4-cyanovalerianic acid)), or peroxides (for example, dibenzoyl peroxide, dilauroyl peroxide, tert-butyl octaneperoxoate, tert-butyl perbenzoate, or di-(tert-butyl)peroxide), further aromatic diazonium salts, bis-sulfonium salts, aromatic iodonium salts, aromatic sulfonium salts, potassium persulfate, ammonium persulfate, alkyl lithium, cumyl potassium, sodium naphthalene, and distyryl dianion. Above all, benzopinacol and 2,2'-dialkylbenzopinacol are particularly preferable as initiators for radical polymerization.

The peroxides and a-diketones are preferably used in combination with an aromatic amine in order to accelerate the initiation. These combinations are also referred to as redox series. An example of these series is a combination of benzoyl peroxide or camphor quinine with an amine (for example, N,N-dimethyl-p-toluidine, N,N-dihydroxyethyl-p-toluidine, ethyl p-dimethylaminobenzoate, or their derivatives). Furthermore, another series are also preferable which contain a peroxide in combination with ascorbic acid, barbiturate, or sulfinic acid as a reducing agent.

Then, heat treatment at about 100 to 200°C produces a condensation reaction, thereby giving a silane coupling agent-derived separation function layer on the surface of the porous supporting layer. While the heating temperature depends on the material of the porous supporting layer, too high a heating temperature causes dissolution to block pores of the porous supporting layer, thus decreasing the water desalination amount to be finally achieved by the separation membrane. On the other hand, too low a heating temperature produces an insufficient condensation reaction to dissolve the separation function layer, thereby decreasing the removal ratio.

In the above-mentioned production method, the step of polymerizing the compound having at least one ethylenic unsaturated compound with a silane coupling agent may be carried out before or after or during the polycondensation step with the silane coupling agent.

The separation membrane thus obtained in the manner as above can be used directly as it is, but before use, it is desirable that the surface of the membrane is hydrophilized, for example, with an alcohol-containing aqueous solution or an alkaline aqueous solution.

3. Porous Supporting Layer

As the porous supporting layer, herein usable is a membrane having the performance as a separation membrane and having a supporting function.

The material and the shape of the material for use as the porous supporting layer are not specifically defined. For example, a layer of a porous resin may be formed on a substrate. As the porous supporting layer, usable is polysulfone, cellulose acetate, polyvinyl chloride, epoxy resin, or a mixture or laminate thereof. Preferred is use of polysulfone having high chemical, mechanical and thermal stability and capable of facilitating pore size control.

Next described is a method for forming the porous supporting layer.

As described below, the porous supporting layer may be formed, for example, by casting a solution of polysulfone in N,N-dimethylformamide (hereinafter this may be referred to as DMF) onto the substrate to be mentioned below, or that is, onto a densely-woven polyester fabric or a nonwoven fabric in a predetermined thickness thereon followed by wet coagulation in water.

The porous supporting layer may also be referred to as a porous resin layer. The porous supporting layer can be formed according to the method described in "Office of Saline Water Research and Development Progress Report", No. 359 (1968), in which the polymer concentration, the solvent temperature and the poor solvent are controlled so as to obtain the above-mentioned configurations. For example, a predetermined amount of polysulfone is dissolved in DMF to prepare a polysulfone resin solution having a predetermined concentration. Next, the polysulfone resin solution is applied onto a substrate of a polyester fabric or a nonwoven fabric nearly in a given thickness, then the solvent in the surface is removed in air for a given period of time, and thereafter the polysulfone is coagulated in a coagulant liquid to form the intended layer. In this step, in the surface part that is kept in contact with the coagulant liquid, the solvent DMF rapidly evaporates away and the polysulfone rapidly coagulates, thereby providing fine open cells each having grown from the part in which DMF has existed and which serves as a nucleus after DMF removal.

In the inside area from the surface part toward the substrate side, DMF evaporates away more slowly and polysulfone coagulates also more slowly than in the surface area, and therefore in the inside area, DMF tends to aggregate to form large nuclei, and consequently, the open cells to be formed may grow big. Needless-to-say, the nucleation condition may gradually change depending on the distance from the surface, and therefore a layer having a gentle pore size distribution with no definite boundary can be formed. By controlling the temperature of the polysulfone resin solution to be used in the formation step, and also by controlling the polysulfone concentration and the relative humidity in the atmosphere where the coating operation is attained, as well as the time to be taken after coating and before dipping in the coagulant liquid and the temperature and the composition of the coagulant liquid, there can be obtained a desired polysulfone film of which the mean porosity and the mean pore size are controlled in the intended manner.

The porous supporting layer imparts mechanical strength to the separation membrane, but does not have separation performance like the separation membrane against components having a small molecular size such as ions, etc. The pore size and the pore distribution in the porous supporting layer are not specifically defined. For example, the porous supporting layer may have uniform and fine pores, or may have fine pores of which the diameter gradually increases from the surface of side on which the separation function layer is formed toward the surface of the other side. In any case where the pore size is uniform or gradually changes, the pore size of the porous supporting layer may be such that the diameter of the circle corresponding to the projected area of the pore, as measured on the surface of the porous supporting layer on which the separation function layer is formed by the use of an atomic force microscope or an electron microscope, is from 1 nm to 100 nm. Especially preferably, the pores in the surface of the porous supporting layer on the side thereof on which the separation function layer is formed have a pore size of from 3 to 50 nm, in terms of the diameter of the circle corresponding to the projected area of each pore, from the viewpoint of the interfacial polymerization reactivity and the retentiveness of the separation function performance of the layer.

The thickness of the porous supporting layer is not specifically defined. From the viewpoint of imparting the strength to the separation membrane, from the viewpoint of forming the height differences in the separation membrane and from the viewpoint of the configuration stability of the feed-side passages, the thickness is preferably within a range of from 20 to 500 $\mu$m, more preferably within a range of from 30 to 300 $\mu$m.

The configuration of the porous supporting layer may be identified through observation with a scanning electron microscope, a transmission electron microscope or an atomic force microscope. For example, the layer may be observed with a scanning electron microscope as follows: The porous supporting layer is peeled from the substrate, and then this is cut according to a freeze-fracture method to give a sample for cross section observation. The sample is coated with platinum or platinum-palladium or with ruthenium tetrachloride, preferably coated thinly with ruthenium tetrachloride, and observed with an ultrahigh-resolution field emission-type scanning electron microscope (UHR-FE-SEM) under an acceleration voltage of from 3 to 6 kV. As the ultrahigh-resolution field emission-type scanning electron microscope, herein usable is an electron microscope of Hitachi's S-900 Model. On the electron microscopic pictures thus taken, the thickness of the porous supporting layer and also the pore size, in terms of the diameter of the circle corresponding to the projected area of each pore, in the surface thereof are determined. Thus determined, the thickness and the pore size of the supporting layer are average values. The thickness of the porous supporting layer is a average value of the found data for 20 points taken at intervals of 20 $\mu$m in the direction perpendicular to the thickness direction of the layer in observation of the cross section of the layer. For pore size determination, 200 pores are measured for the diameter of the circle corresponding to the projected area of each pore, and all the found data are averaged to give the pore size.

4. Substrate

Further, the separation membrane may comprise a substrate from the viewpoint of the strength, the dimension stability and the concavoconvex shape formability thereof. The substrate is preferably a fibrous substrate from the viewpoint of the strength, the concavoconvex shape formability and the fluid permeability thereof. As the substrate, preferred is use of any of a long-fiber nonwoven fabric or a short-fiber nonwoven fabric. Especially preferred is a long-fiber nonwoven fabric having excellent film formability. With a long-fiber nonwoven fabric, it is possible to prevent a high-molecular polymer solution for forming a substrate from excessively infiltrating and passing through the substrate when cast on the substrate. Furthermore, when a long-fiber nonwoven fabric is used, the porous supporting layer can be prevented from peeling off and also the trouble that substrate fluffing or the like causes membrane unevenness or results in defects such as pinholes can be prevented. Use of a long-fiber nonwoven fabric that comprises thermoplastic continuous filaments makes it possible to prevent the trouble that the fluffing which occurs when a short-fiber nonwoven fabric is used causes uneven distribution of the cast polymer solution or results in membrane defects. In continuous production of the separation membrane, tension may be applied thereto in the machine direction, and therefore, it is desirable that a long-fiber nonwoven fabric excellent in dimensional stability is used as the substrate.

In the long-fiber nonwoven fabric, preferably, fibers in a surface layer of the long-fiber nonwoven fabric on a side opposite to the porous supporting layer have a higher longitudinal orientation than fibers in a surface layer of the long-fiber nonwoven fabric on a porous supporting layer side, from the viewpoint of the formability and the strength of the fabric. Having the configuration, the nonwoven fabric can more effectively secure the strength thereof and can be therefore prevented from being broken. Further, the configuration of the type enhances the formability of the laminate that includes the porous supporting layer and the substrate in giving concavoconvex shapes to the separation membrane, and the concavoconvex shapes of the separation membrane can be thereby stabilized. More specifically, the fiber orientation degree in the surface layer on the side opposite to the porous supporting layer of the long-fiber nonwoven fabric is preferably from 0° to 25°, and preferably, the fiber orientation degree difference between the surface layer on the side opposite to the porous supporting layer and the surface layer on the porous supporting layer side is from 10° to 90°.

The process of producing the separation membrane and the process of producing the separation membrane element include a heating step. When heated in this, the porous supporting layer or the separation function layer may shrink. Especially in the lateral direction in which no tension is given in continuous film production, the shrinkage is noticeable. The shrinkage may provide a problem of dimensional stability or the like, and therefore, the substrate is desired to have a small thermal dimensional change. In the nonwoven fabric, when the difference between the fiber orientation degree in the surface layer on the side opposite to the porous supporting layer and the fiber orientation degree in the surface layer on the porous supporting layer side is from 10° to 90°, then the change in the lateral direction of the fabric by heat can be retarded, and therefore, the fabric of the type is preferred.

The fiber orientation degree as referred to herein is an index of indicating the direction of the fibers of the nonwoven fabric to constitute the porous supporting layer, and means the mean angle of the fibers constituting the nonwoven fabric in a case where the machine direction in continuous film formation is referred to as 0° and the direction perpendicular to the machine direction, or that is, the lateral direction of the nonwoven fabric substrate is referred to as 90°. Accordingly, when the fiber orientation degree is nearer to 0°, then the fibers are in more longitudinal orientation; but when the degree is nearer to 90°, then the fibers are in more lateral orientation.

The fiber orientation degree is determined as follows: Ten small sample pieces are randomly sampled from the nonwoven fabric, and the surface of each piece is photographed at 100 to 1000-power with a scanning electron microscope. Ten fibers from each sample, therefore 100 fibers in total are analyzed in point of the angle thereof, based on the angle of the lengthwise direction (longitudinal direction, machine direction) of the nonwoven fabric referred to as 0° and on the angle of the cross direction (lateral direction) of the nonwoven fabric referred to as 90°. The found data are averaged. The average value is rounded from the first decimal place to the closest whole number to be the fiber orientation degree of the analyzed fabric.

5. Hydrophilic Molecules

The separation membrane contains hydrophilic molecules in at least one of the surface and the inside thereof.

The hydrophilic molecules may be applied only onto the surface of the separation membrane, or may be infiltrated into the inside the separation membrane. The surface of the separation membrane indicates one surface or both surfaces thereof when the membrane is a flat membrane, or indicates one or both of the inner surface and the outer surface when the membrane is a hollow fiber membrane. Inside means the part between the two surfaces when the membrane is a flat membrane and means the part between the outer surface and the inner surface when the membrane is a hollow fiber membrane. Inside may especially mean the part to be brought into contact with liquid such as water, etc. Inside may also be expressed as the part of wall in the separation membrane structure.

Preferably, the hydrophilic molecules are arranged at least on the surface of the feed side of the separation membrane. Namely, the hydrophilic molecules are preferably contained in at least one of the separation function layer or the layer provided nearer to the feed side than the separation function layer. For example, the concept that the separation membrane "contains hydrophilic molecules" includes an embodiment where the separation membrane has a - protective layer having a hydrophilic group, on the feed side thereof. The hydrophilic molecules may also be contained in the porous supporting layer of the separation membrane, or may be in the substrate. The protective layer may contain a crosslinked product of a water-soluble organic polymer having a hydrophilic group as the main ingredient thereof.

In case where the separation membrane contains hydrophilic molecules, the water permeability and the solute removability of the separation membrane may lower even when the separation membrane is dried at a high temperature. In this, drying means that the water content of the separation membrane is reduced to 20% or less. The water content of the separation membrane is expressed by (weight of separation membrane before bone-dry treatment - weight of separation membrane in bone-dry state)/(weight of separation membrane before bone-dry treatment) x 100 (%). The hydrophilic molecule means a substance soluble in water, and is specifically a substance capable of dissolving in water in a ratio by weight of 1/100 or more. The separation membrane in a bone-dry state can be obtained by drying the separation membrane at a possibly highest temperature at which the structure of the separation membrane does not change or does not deform, for a sufficient period of time. Specifically, bone-dry means dry treatment of the separation membrane at 105°C for 2 hours.

The weight of the hydrophilic molecules in the separation membrane after bone-dry treatment (or that is, in a bone-dry state) is preferably 0.1 % or more based on the weight of the bone-dry separation membrane from which the weight of the hydrophilic molecules has been subtracted, and is preferably 40% or less. For example, highly-volatile hydrophilic molecules may evaporate away from the separation membrane by drying and the remaining amount thereof decreases. If so, a protective layer of the hydrophilic molecules could not be formed and further, the membrane performance degradation owing to drying could not be prevented. On the other hand, when the weight is more than 40%, then the separation membrane may be swollen by the hydrophilic molecules and could not express the separation function intrinsic thereto. The ratio of the weight of the hydrophilic molecules in the bone-dry separation membrane to the weight of the bone-dry separation membrane from which the weight of the hydrophilic molecules has been subtracted may be expressed as (X-Y)/Y x 100 (%) in which X indicates the weight of the bone-dry separation membrane containing hydrophilic molecules and Y indicates the weight of the bone-dry separation membrane not containing hydrophilic molecules.

The production method for the separation membrane comprises, as the step of incorporating hydrophilic molecules in a separation membrane, a step of bringing a separation membrane into contact with hydrophilic molecules.

In this description, both the finished membrane and the work-in-process membrane (this is a membrane in the course of production but may have a separation function, and for example, includes a membrane in which concavoconvex parts are not formed and a membrane not containing hydrophilic molecules) are referred to as "separation membrane" for convenience of explanation.

The step of bringing hydrophilic molecules into contact with a separation membrane may include, for example, dissolving hydrophilic molecules in water or in a mixture of water and alcohol or ketone and bringing the resulting solution into contact with a separation membrane. As described below, the step of bringing hydrophilic molecules into contact with a separation membrane may include coating the separation function layer with a -water-soluble organic polymer having a hydrophilic group and then crosslinking the water-soluble organic polymer to form a water-insoluble protective layer having a hydrophilic group. In the following, in case where the two steps of bringing hydrophilic molecules with a separation membrane are discriminated from each other, the step of bringing hydrophilic molecules into contact with a separation membrane but not followed by crosslinking is referred to as contact treatment, and the step of forming the water-insoluble protective layer is referred to as protective layer formation treatment.

As the hydrophilic molecules to be used in the contact treatment, especially preferred is a moisturizer. The moisturizer is a substance capable of preventing water vapor evaporation from the separation membrane.

Not specifically defined, the hydrophilic molecules to be used for the contact treatment may be any ones not detracting from the effect of the invention. For example, there are mentioned sugar-chain compounds and polyalcohols. The sugar-chain compounds include glucose, mannitol, sorbitol, dextrin, trehalose, galactose, xylitol, lactose, hyaluronan, chondroitin sulfate, etc. From the viewpoint that the performance degradation owing to drying of the separation membrane is extremely low, it is desirable that the hydrophilic molecules are of at least one sugar group selected from monoses, bioses and trioses. Of those, more preferred is at least one sugar group selected from glucose, sucrose, maltose, lactose, trehalose and raffinose. The polyalcohols include glycerin; glycols such as 1,3-butylene glycol, polyethylene glycol, etc.; polyvinyl alcohol; diglycerin derivatives; polyglycerin fatty acid esters; polyglycerin, etc. From the viewpoint that the performance degradation owing to drying of the separation membrane is extremely low, preferred is at least one polyalcohol selected from polyvinyl alcohol, glycols, glycerin and polyglycerin. Not specifically defined, the polyglycerin fatty acid esters may be any ones soluble in water, and as examples, there are mentioned stearic acid, oleic acid, caprylic acid, lauric acid, myristic acid, behenic acid, erucic acid, etc.

As the hydrophilic molecules, also usable in addition to the above are protein hydrolyzates such as soluble collagen, elastin, keratin, etc.; carboxylic acids and their salts such as polyglutamic acid, sodium pyrrolidonecarboxylate, etc.; various types of animal and plant extracts having a moisturizing effect, such as aloe extract, brown sugar extract, marine alga extract, yeast extract, rice bran extract, soybean extract, rose fruit extract, sophora angustifolia root extract, gardenia extract, ginseng extract, capillary artemisia extract, rosemary extract, bifidus fermentation extract, human oligopeptides, etc. One or more of these may be used here either singly or as combined.

In bringing the separation membrane with a solution of hydrophilic molecules in the contact treatment, the contact treatment time is not specifically defined. Preferably, the time is from 5 seconds to 5 minutes at around room temperature, more preferably from 10 seconds to 3 minutes. When the contact treatment time is short, then the components of the contact treatment liquid could not reach inside the membrane and the re-flowing capability may lower. On the contrary, when the contact treatment time is long, then the treatment efficiency may lower.

The method of bringing the separation membrane with a solution of hydrophilic molecules in the contact treatment includes, for example, dipping the separation membrane in the solution, applying the solution to the separation membrane, etc. Specifically, as the coating method, there is mentioned a method of using an apparatus such as a spin coater, a wire bar, a flow coater, a die coater, a roll coater, a spray, etc.

The concentration of the hydrophilic molecules in the solution may vary depending on the effect to be obtained and the combination of the membrane, the solvent and the solute, but is preferably within a range of from 0.1% by weight to 50% by weight. A more suitable concentration range can be determined with ease in a pretest. For example, for polyglycerin or trehalose, the concentration thereof in solution is preferably from 3% by weight to 30% by weight, more preferably from 5% by weight to 15% by weight. Alcohol, surfactant, antioxidant or the like may be in the solution of hydrophilic molecules. In this case, the alcohol, the surfactant, the antioxidant or the like is not specifically defined, falling within a range not overstepping the intended performance range.

Not specifically defined, the contact treatment temperature may be within a range not deteriorating the membrane. For example, in the treatment at lower than 0°C, the membrane may be broken owing to the freezing of water contained in the membrane; but when the temperature is too high, the membrane may be deteriorated and could not function as a separation membrane. The upper temperature limit may vary depending on the separation membrane material to be treated. In case where the separation membrane is composed of a polyethylene terephthalate-made substrate, a polysulfone-made porous supporting layer and a crosslinked polyamide-made separation function layer, the contact treatment temperature is preferably from 5°C to 95°C, more preferably from 15°C to 40°C.

Prior to the contact treatment, it is desirable that the separation membrane is fully washed. When the separation membrane is insufficiently washed, then the unreacted substances and additives may remain as impurities in the solution of hydrophilic molecules in the separation membrane forming step, and these impurities may cause reduction in the efficiency of the immersion treatment. The washing method is not specifically defined, and as one example, there is mentioned a case of immersing the separation membrane in pure water or in an aqueous acid solution, an aqueous alkali solution, an aqueous reducing agent solution, an aqueous oxidizing agent solution an aqueous alcohol solution or the like, or applying water under pressure to the separation membrane. A most preferred case comprises bringing the separation membrane with an alcohol having from 1 to 4 carbon atoms or with an aqueous solution thereof. The washing temperature is not specifically defined but is preferably higher within a range within which the temperature does not have any negative influence on the membrane performance, as enabling high-efficiency washing.

The contact treatment step may be carried out in any stage of before or after the step of imparting height differences to the separation membrane. When the step of imparting height differences to the separation membrane is carried out after the contact treatment step, then the moisturizer could function as a protective layer and therefore the separation membrane can be thereby prevented from being deteriorated by working. The step of imparting height differences to the separation membrane can be carried out by embossing or by arrangement of a different material, as described below.

After the contact treatment, the separation membrane may be dried. Any conventional known method is employable for the drying method after the contact treatment. Preferred examples of the drying method include a method of keeping the separation membrane in an air current at room temperature or under heat, a method of keeping the separation membrane in a dry air current, a method of irradiation with IR rays, a method of irradiation with microwaves, a method of bringing the separation membrane into contact with a hot roller, etc. Different drying methods may be carried out simultaneously in parallel, or may be carried out in a time-series processing mode. Regarding the region to be dried, the entire separation membrane may be dried, or only the adhered and sealed part and therearound may be dried. Prior to drying, the contact treatment solution may be roughly removed according to a method of spontaneous flowing, centrifugal liquid removal or the like, and this is effective for reducing the load in the drying step.

Regarding the time for drying the separation membrane and the shape of the membrane to be dried, the separation membrane may be dried in the form near to the form of the final separation membrane element, and for example, in case where the form of the separation membrane is a flat membrane, a separation function layer may be formed on the surface of the separation membrane, and after the separation membrane is fully washed, it may be dried. In case where the separation membrane is a hollow fiber membrane or a tubular membrane, the membrane may be dried after the fiber bundles have been formed or after the fiber bundles have been inserted into a case of a separation membrane element, or as the case may be, the membrane may also be dried prior to the forming or insertion, or that is, the membrane may be dried while in the form of spin-off balls or bobbin-wound strips.

The range of the separation membrane to be dried is not specifically defined. In case where the membrane performance is desired to be enhanced through the drying treatment, naturally it is desirable that the entire membrane is dried.

The temperature and the time for drying must be determined in consideration of the heat resistance of the membrane. For example, in case where the separation membrane is composed of a polyethylene terephthalate-made substrate, a polysulfone-made porous supporting layer and a crosslinked polyamide-made separation function layer, the drying temperature may be from 50°C to 180°C, and even when the drying temperature is higher than 100°C, the dried membrane could exhibit excellent water permeability and solute removability. However, when the drying temperature is higher than 180°C, the separation membrane could hardly keep water. Within the range not detracting from the object of the invention, the drying time may be suitably controlled.

In the following, a case of treatment for protective layer formation is described in which the separation membrane comprises a substrate, a porous supporting layer and a separation function layer. However, the treatment for protective layer formation is applicable also to a single-layer separation membrane and to a separation membrane in which the separation function layer and the porous supporting layer form one layer.

The method for producing the composite semipermeable membrane may comprise a step of polycondensation of a polyfunctional aliphatic amine compound having at least two amino groups in one molecule thereof and a polyfunctional acid halide having at least two acid halide groups in one molecule thereof to form a polyamide-containing separation function layer on a porous supporting membrane. The production method for the composite semipermeable membrane may also comprise a step of forming a separation function layer, then coating the separation function layer with a water-soluble organic polymer having a hydrophilic group, and thereafter crosslinking the water-soluble organic polymer to form a water-insoluble protective layer having a hydrophilic group.

Forming the protective layer through crosslinking of the water-soluble organic polymer having a hydrophilic group on the separation function layer increases the hydrophilicity of the membrane and increases the water permeability thereof, and further prevents organic substances from adhering to the surface of the membrane and therefore prevents fouling on the membrane surface.

The hydrophilic group may have at least one functional group selected from a group consisting of a secondary amine, a hydroxyl group and an ether group. Arranging a water-soluble organic polymer on the surface of the separation function layer and crosslinking the polymer to form a water-insoluble protective layer enables introduction of the hydrophilic group of a secondary amine, a hydroxyl group or an ether group into the separation membrane. Preferably, the separation membrane contains at least one such hydrophilic group, more preferably at least two such hydrophilic groups.

As the water-soluble organic polymer, there are mentioned a vinylic polymer, a condensed polymer an addition-polymerization polymer, etc. In particular, preferred are polymers having a nonionic hydrophilic group. Preferably, the hydrophilic group has at least one functional group selected from a group consisting of a secondary amine (-NMR), a hydroxyl group (-OH) and an ether group (-0-). Specifically, for example, there can be used polyvinyl alcohol, partial hydrolyzates of polyvinyl acetate, polyvinyl pyrrolidone, polyacrylic acid, polyallylamine, polyethyleneimine, polyepiaminohydrin, amine-modified polyepichlorohydrin, polyacrylamide, polyacrylic acid amide, polyethylene glycol, cellulose derivatives, etc. These may be used alone, but for example, may be used as combined with polyethyleneimine and polyvinyl alcohol. Preferred here is introduction of a secondary amine and a hydroxyl group.

The protective layer formation treatment may include applying an aqueous solution of a water-soluble organic polymer to the separation function layer. As the coating method, employable here is the method exemplified hereinabove for the contact treatment. The concentration of the aqueous polymer solution preferably falls within a range of from 0.01% by weight to 30% by weight, more preferably within a range of from 0.01% by weight to 10% by weight, even more preferably within a range of from 0.01% by weight to 5% by weight. When the concentration is lower than 0.01% by weight, the surface of the separation function layer could hardly be coated uniformly; but when more than 30% by weight, the thickness of the obtained, water-insoluble crosslinked polymer may increase so that the water production amount may decrease owing to the resistance of the crosslinked polymer.

Preferably, the protective group contains a hydrophilic group of a carboxyl group. Also preferably, the hydrophilic group concentration, as measured on the feed side of the separation membrane, or that is, on the protective layer side thereof through electron spectroscopy for chemical analysis (ESCA), falls within a range of from 0.2 to 0.6, and preferably, the carboxyl group concentration falls within a range of from 0.001 to 0.03. The configuration keeps the salt removal ratio of the membrane high and further increases the water permeability of the membrane.

Here the hydrophilic group concentration means the proportion of the hydrophilic group (molar number) to the total carbon amount (molar number), as expressed by the following numerical expression. The hydrophilic group includes a case of various hydrophilic groups as combined.

$$\text{Hydrophilic Group Concentration} = \text{found data of hydrophilic group (molar number)/found data of total carbon amount (molar number).}$$

The hydrophilic group includes a hydroxyl group, an amino group, an ether group, a carbonyl group, a sulfonic acid group and a carboxyl group, and has at least one functional group selected from a group consisting of a secondary amine, a hydroxyl group and an ether group. The hydrophilic group concentration can be determined according to electron spectroscopy for chemical analysis (ESCA) as exemplified in "Journal of Polymer Science", Vol. 26, 559-572 (1988) and "Journal of Adhesion Society of Japan", Vol. 27, No. 4 (1991).

The amino group concentration of primary amine and secondary amine, as well as the hydroxyl group concentration and the carboxyl group concentration can be determined according to a vapor phase chemical modification method with a labeling reagent. As the labeling reagent, pentafluorobenzaldehyde may be used for primary amine; trifluoroacetic anhydride may be used for hydroxyl group and amino group; and trifluoroethanol and dicyclohexylcarbodiimide may be used for carboxyl group. By changing the labeling reagent in accordance with the hydrophilic group, the same measurement method may be used.

As one example, the measurement method for carboxyl group concentration is described below. The sample is chemically modified in a vapor phase with a labeling agent, and from the ESCA spectrum of the standard sample of polyacrylic acid also chemically modified in a vapor phase in the same manner, the reaction ratio (r) of the labeling reagent and the reaction residue (m) are obtained. The areal intensity [F1s] of the F1s peak (1s orbit peak of fluorine) resulting from the reaction between the sample and the labeling reagent is determined. Through elementary analysis, the areal intensity [C1s] of the C1s peak (1s orbit peak of carbon) is determined.

The measurement conditions are, for example, as follows:

Apparatus: SSX-100 (by US SSI)
Excited X-ray: aluminium $K\alpha 1$, 2 rays (1486.6 eV)
X-ray output: 10 kV 20 mV
Photoelectron ejection angle: 35°

For data processing, the C1s peak position of neutral carbon (CHx) is adjusted to 284.6 eV.

The areal intensity [F1s] and [C1s] thus determined in the manner as above is assigned to the following numerical expression shown in "Journal of Polymer Science", Vol. 26, 559-572 (1988), thereby determining the carboxyl group concentration.

[Math. 1]

$$R_{COOH} = \frac{[F1_S]}{3k_{F1s}[C1_S] - (2+13m)[F1_S]r}$$

$R_{COOH}$: carboxyl group concentration
[F1s]: areal intensity of 1s orbit peak of fluorine
$k_{F1s}$: sensitivity correction of 1s orbit peak of fluorine
[C1s]: areal intensity of 1 s orbit peak of carbon
m: residual percentage of reaction residue
r: reaction ratio of labeling reagent

The carbonyl group and sulfonic acid group concentration is determined as follows: As in "Journal of Adhesion Society of Japan", Vol. 27, No. 4 (1991), the sample is wide-scanned or narrow-scanned. From the chemical shift in the narrow scanning, the chemical condition of the element is calculated. Next, the narrow scan spectrum is analyzed for peak division, from which the concentration is determined.

The ether group concentration can be determined by subtracting the hydroxyl group concentration obtained in a vapor phase chemical modification method from the C-O bond concentration obtained in C1s peak division (the C-O bond concentration is based on the sum total of the ether group concentration and the hydroxyl group concentration).

When the hydrophilic group concentration is high, then the membrane is free from fouling and the water permeability thereof may increase, but the salt removal ratio through the membrane tends to lower. On the contrary, when the hydrophilic group concentration is low, then the membrane becomes hydrophobic and may be troubled by fouling and therefore the water permeability of the membrane lowers. Accordingly, the hydrophilic group concentration as measured on the feed side of the separation membrane is preferably within a range of from 0.2 to 0.6, more preferably within a range of from 0.2 to 0.5. Also preferably, the protective group contains a carboxyl group, and the carboxyl group concentration as measured on the feed side of the separation membrane falls within a range of from 0.001 to 0.03, more preferably within a range of from 0.001 to 0.02. When the hydrophilic group concentration and the carboxyl group concentration each fall within the above range, then the separation membrane can keep a high salt removal ratio and can attain a high water permeability. Further, even when the raw fluid to be treated contains cationic organic substances (surfactants), the reduction of the water permeability of the membrane can be prevented. On the contrary, when the carboxyl group concentration is more than 0.03, then the water permeability of the membrane may tend to lower.

Regarding the hydrophilic group concentration as measured on the feed side of the separation membrane, the primary amine concentration relative to the total number of nitrogen atoms preferably falls within a range of from 0.05 to 0.5, more preferably within a range of from 0.05 to 0.45, even more preferably within a range of from 0.10 to 0.4. The primary amine is an ionic hydrophilic group, and therefore, when the concentration thereof is lower than 0.05, then fouling with ionic surfactants could be prevented but the water production amount through the membrane tends to lower; but when the concentration is more than 0.5, then the water production amount may increase but there may readily occur fouling.

Regarding the hydrophilic group concentration as measured on the feed side of the separation membrane, the total of the hydroxyl group concentration and the secondary amine concentration preferably falls within a range of from 0.008 to 0.8, more preferably within a range of from 0.01 to 0.6, even more preferably within a range of from 0.05 to 0.6. The hydroxyl group and the secondary amine are poorly-ionic hydrophilic groups, and therefore, when the total of these concentrations is lower than 0.008, then fouling could be hardly prevented and the water production amount through the membrane could hardly increase; but on the other hand, when more than 0.8, then the membrane could hardly form.

Regarding the hydrophilic group concentration as measured on the feed side of the separation membrane, the ratio of the number of chlorine atoms to the total number of carbon atoms is preferably 0.03 or less, more preferably 0.02 or less. The ratio of the number of chlorine atoms is the index that indicates the remaining acid halide concentration in the separation membrane; and when the ratio is more than 0.03, then sufficient crosslinking reaction could not be attained and the membrane performance may worsen. The ratio of the number of chlorine atoms may be determined by wide scanning through the above-mentioned ESCA to provide the compositional ratio of the constitutive elements.

As the method of crosslinking the water-soluble organic polymer, for example, there may be employed a thermal crosslinking method in the presence of an acid or alkali catalyst using a polyfunctional aldehyde having at least two functional groups in one molecule thereof such as glyoxal, glutaraldehyde or the like. The additive concentration is preferably within a range of from 0.01 % by weight to 5.0% by weight, more preferably within a range of from 0.01 % by weight to 1.0% by weight, even more preferably within a range of from 0.01 % by weight to 0.5% by weight. When the concentration is lower than 0.01 % by weight, then the crosslinking density may be low and the insolubility in water of the crosslinked polymer may be therefore low; but when more than 5.0% by weight, then the crosslinking density may be high and the water production amount through the membrane may lower and, if so, in addition, the crosslinking reaction would go on rapidly to cause gelling at room temperature therefore resulting in difficulty in uniform coating.

The acid to be used may be an inorganic acid or an organic acid, and for example, in case where hydrochloric acid is used, the concentration thereof is preferably within a range of from 0.01 mol/L to 1.0 mol/L, more preferably within a range of from 0.01 mol/L to 0.5 mol/L, even more preferably within a range of from 0.01 mol/L to 0.3 mol/L. When the concentration is lower than 0.01 mol/L, then the acid could hardly express the function as a catalyst; but when higher than 1.0 mol/L, the separation function layer would tend to hydrolyze.

For the heating method for thermal crosslinking, for example, employable is a method of hot air blowing. The heating temperature in the case is preferably within a range of from 30°C to 150°C, more preferably within a range of from 30°C to 130°C, even more preferably within a range of from 60°C to 130°C. When the heating temperature is lower than 30°C, sufficient heating could not be attained and the crosslinking reaction speed may lower; but when higher than 150°C, then side reaction may often occur.

The composite membrane obtained through the thermal crosslinking is washed with water and preferably further washed with water at a temperature falling within a range of from 30°C to 70°C to thereby remove the excessive water-soluble substance and acid catalyst.

Next, it is desirable that the water-insoluble crosslinked polymer is brought into contact with a surfactant to increase the hydrophilicity of the membrane. The surfactant is preferably a neutral surfactant such as polyoxyethylene octyl phenyl ether, or an anionic surfactant such as sodium normal dodecylbenzenesulfonate, etc. In case where the surfactant is used in the form of a solution thereof, the concentration thereof is preferably within a range of from 0.1 mg/L to 1,000 mg/L, more preferably within a range of from 1 mg/L to 100 mg/L.

The hydrophilicity of the membrane may also be increased by bringing the membrane into contact with a compound of which the surface tension fall within a range of from 17 dyn/cm to 27 dyn/cm. The compound includes, for example, alcohols, hydrocarbon, esters, ethers, ketones, etc. Specifically, the alcohols include methyl alcohol, ethyl alcohol, n-propyl alcohol, isopropyl alcohol, isobutyl alcohol; and the hydrocarbons include hexane, octane, nonane, decane. The esters include, for example, ethyl acetate, ethyl formate, ethyl propionate, methyl caproate; and the ketones include diethyl ketone. One alone or two or more of these may be used either singly or as combined. Of the above, preferred is use of alcohols; more preferred is use of methyl alcohol, ethyl alcohol or isopropyl alcohol; and even more preferred is isopropyl alcohol. The concentration of the compound to be added is preferably within a range of from 0.1% by weight to 50% by weight, more preferably within a range of from 0.5% by weight to 15% by weight. When the concentration is higher than 50% by weight, then the cost may increase; but when lower than 0.1 % by weight, the effect of enhancing the water permeability of the membrane may be poor.

The time for which the surfactant or the compound of which the surface tension falls within a range of from 17 dyn/cm to 27 dyn/cm is kept in contact with the membrane is preferably at least 10 seconds, more preferably at least 1 minute.

For the same reason as that in the contact treatment, preferably, the step of forming the water-insoluble protective layer having a hydrophilic group is carried out prior to the step of imparting height differences to the separation membrane by embossing the membrane or by arranging a different material on the membrane.

The production method for the separation membrane may include both contact treatment and protective layer formation treatment. In other words, the separation membrane may be provided with the hydrophilic molecules given by the contact treatment and the protective layer having a hydrophilic group.

Like in the case of carrying out the step of bringing the separation membrane into contact with hydrophilic molecules, a step of drying the separation membrane may be carried out after the protective layer forming step. The separation membrane of the present invention that contains hydrophilic molecules enables water treatment even though any other pretreatment such as hydrophilization treatment or the like is given thereto after drying. However, the dried separation membrane may be brought into contact with an alcohol having from 1 to 4 carbon atoms or with an aqueous solution thereof before use, thereby exhibiting further enhanced water permeation performance.

The separation membrane of the invention may be prevented from being worsened in point of the water permeability thereof by drying. The matter as to whether or not the water permeation performance of the membrane is lowered by drying could be evaluated by calculation of the amount of the permeate through the membrane and the blocking performance of the membrane. Specifically, the separation membrane is evaluated as to whether or not the amount of the permeate therethrough may lower by drying by which the membrane is hydrophobized or the pore size in the membrane is reduced, or as to whether or not the separation membrane is cracked by drying whereby the amount of the permeate could increase but the blocking performance of the membrane may lower.

6. Height Difference

Preferably, the separation membrane has, as formed on at least one of the feed side and the permeate side thereof, a height difference of from 80 μm to 2000 μm. "Having a height difference" may be reworded to "having concavoconvex shapes". The sequence of the step of imparting a height difference and the other steps is not specifically defined. When the step of bringing the separation membrane into contact with a solution of hydrophilic molecules is carried out first, then the hydrophilic molecules adhering to the separation membrane could function as a protective layer, and therefore the damage to the membrane can be reduced in the embossing treatment or in the different material arrangement by hot-melting coating to be mentioned below or in membrane rubbing during element winding. If so, the salt removal ratio of the separation membrane can be prevented from lowering and the element recovery ratio can also be prevented from lowering. The element recovery ratio as referred to herein is as follows. The separation membrane element is tested in an air leak test in water. The number of leaves with leakage is counted, and the element recovery ratio is represented by (number of leaves with air leakage)/(number of tested leaves).

The method for imparting height differences is not specifically defined. By embossing, hydrostatic molding or calendering, the separation membrane may be worked to have height differences by itself; or a discontinuous membrane formed of a different material excellent in passages formability is arranged on the feed side and/or the permeate side of the separation membrane.

Preferably, after formation thereof, the separation membrane is heat-treated at 40 to 150°C to thereby enhance the concavoconvex shape retentiveness thereof. Regarding the heat treatment temperature after the formation of the separation membrane, the heat treatment temperature for polyester fibers can be identified according to a known method in which the substrate alone is peeled off from the separation membrane and DSC of the substrate is measured. A discontinuous different material may be arranged on the feed side and/or the permeate side of the separation membrane to impart height differences to the membrane.

<Height Difference by Embossing>

The embossing method includes, for example, roll embossing. In this case where pressurization treatment and heat treatment are carried out simultaneously, the affinity between the separation function layer and the protective layer can be enhanced and therefore the two may be fixed firmly. In particular, in a case where the temperature of the feed water (or that is, raw fluid) is high, the protective layer tends to dissolve in water and may be therefore hardly held by the separation function layer. In such a case, the protective layer may be stably held by the separation function layer by heat treatment under pressure.

Especially in a case where height differences are given to the surface of the separation membrane by embossing, the separation function layer may be often damaged by the embossing roll to have defects. However, the presence of the protective layer on the surface of the separation membrane prevents the formation of defects.

For producing a high-efficiency separation membrane element without causing deterioration of the membrane performance, it is desirable that the surface defect ratio of the separation membrane is 1% or less.

Here, the surface defect ratio of the separation membrane as defined in the present invention may also be referred to as a failure ratio, and can be obtained as follows: After pressure forming, the separation membrane is cut into a size of 5 cm x 5 cm, using a dye not adsorbed by the separation membrane, and the surface on the side of the separation function layer of the separation membrane is stained. Subsequently, the separation membrane is washed with running water, and the value obtained by dividing the area of the stained part of the separation membrane by the total area of the separation membrane piece (that is, 25 $cm^2$) is referred to as the surface defect ratio. The area of the stained part of the separation membrane can be determined through image analysis of the digital image obtained by scanning the stained separation membrane with a digital scanner.

The type of the dye, the concentration of the dye, the dyeing time and the image analysis software to be used are described in detail in the section of Examples given below.

The pressure and the treatment temperature in roll-embossing may be suitably determined in accordance with the melting point of the material contained in the separation membrane. For example, in case where a porous resin of an epoxy resin is used, the linear pressure is preferably from 10 kg/cm to 60 kg/cm and the heating temperature is preferably from 40°C to 150°C, more preferably from 50°C to 130°C. In case where a porous resin of a heat-resistant resin such as polysulfone or the like is used, the linear pressure is preferably from 10 kg/cm to 70 kg/cm and the roll heating temperature is preferably from 70°C to 160°C. In roll-embossing, the winding speed is preferably from 1 m/sec to 20 m/sec in any case.

When the separation membrane is heat-treated under pressure under the condition as above, the separation membrane is consolidated in the convex parts thereof, and therefore the thickness of the porous supporting layer and the substrate is thinner than that in the concave parts of the membrane. After the pressure heat treatment, when the ratio of the thickness of the porous supporting layer in the convex parts of the surface of the separation membrane to the thickness of the porous supporting layer in the concave parts of the surface of the separation membrane is from 0.1 to 0.95 and when the ratio of the thickness of the support in the convex parts of the surface of the separation membrane to the thickness of the substrate in the concave parts of the surface of the separation membrane is from 0.1 to 0.95, then the physical affinity between the protective layer and the separation function layer is bettered and the ability of the separation function layer to hold the protective layer may be thereby improved.

In embossing, the shape of the roll pattern is not specifically defined. It is important that the flow resistance through the passages is reduced and the passages are stabilized when a fluid is fed to run through the separation membrane element. From these viewpoints, the shape of the pattern as observed from the top of the surface of the roll may be oval, circular, oblong, trapezoidal, triangular, rectangular, square, parallelogram, rhombic or amorphous. In steric aspect, the shape from the top of the surface is directly transferred as it is in the surface direction, or transferred as a widening shape, or transferred as a narrowing shape.

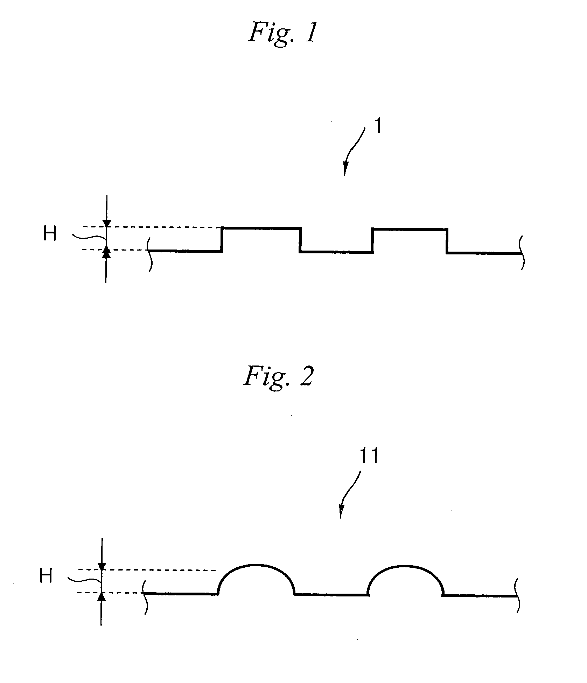

Of the embossed membrane, the convex part on the feed side corresponds to the concave part on the permeate side and the concave part on the feed side corresponds to the convex part on the permeate side, like those of the separation membrane 1 and the separation membrane 11 shown in Fig. 1 and Fig. 2, respectively. In the drawings, the height difference is expressed by the sign H.

<Height Difference by Different Material>

Next described in detail is the separation membrane with height differences given by a discontinuous member formed of a different material. The discontinuous member is one of the constituent elements of the separation membrane, and therefore, the part of the separation membrane from which the discontinuous member is removed is referred to as a separation membrane body, and the configuration containing the separation membrane body and the discontinuous member may be referred to as a separation membrane.

"Different material" is a substance of which the chemical structure differs from that of the material to constitute the surface of the separation membrane body on which the discontinuous member is provided.

The composition of the discontinuous member is not specifically defined. From the viewpoint of the chemical resistance thereof, dot or linear substances including urethane, epoxy polymer, or preferably polyolefins such as polyethylene, polypropylene, and copolyolefins is used.

The discontinuous member can stably form permeate-side passages when the separation membrane is incorporated in an element and a pressure is given thereto, and in addition, the flow resistance of the member is smaller than that of conventional net and therefore the member can form high-efficiency passages.

Preferably, the discontinuous member adheres to the separation membrane. As kept adhering to the separation membrane, the discontinuous member hardly damages the surface of the function member and is excellent in durability even when there occurs rapid pressure change or flow change, different from conventional continuous members such as net not adhering to the separation membrane.

"Discontinuous" means that the projected image of the member forms a discontinuous shape relative to the surface of the separation membrane. In other words, the discontinuous member is divided in plural portions, or that is, the discontinuous member is a combination of multiple members, in which the individual members are separable from each other. "Discontinuous" may be reworded to such that the adjacent constitutive members are spaced from each other in such a degree that a fluid could run between those adjacent members.

The shape of the individual discontinuous members may be, for example, semispherical, conical (including circular conical, pyramidal), columnar (including circular columnar, prismatic columnar), or wall-like. Specifically, the surface form of the discontinuous member (of which the surface is parallel to the surface direction of the separation membrane body) specifically includes circular (including oval and true circular) and linear ones. The cross-section form of the discontinuous member in the thickness direction of the separation membrane includes semispherical and rectangular ones. Multiple linear or wall-like spacers provided on one separation membrane are so arranged that they do not intersect with each other, and for example, they are arranged in parallel to each other.

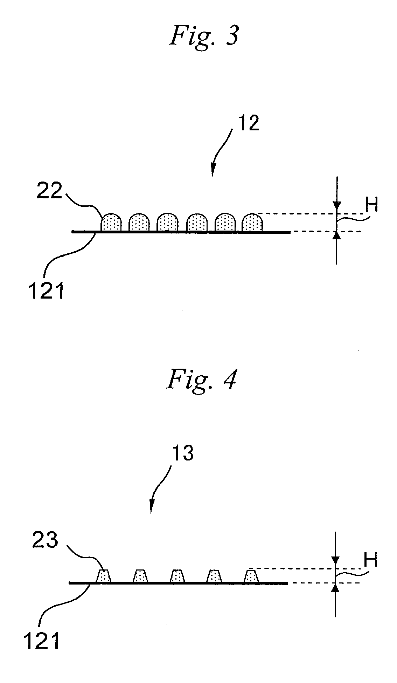

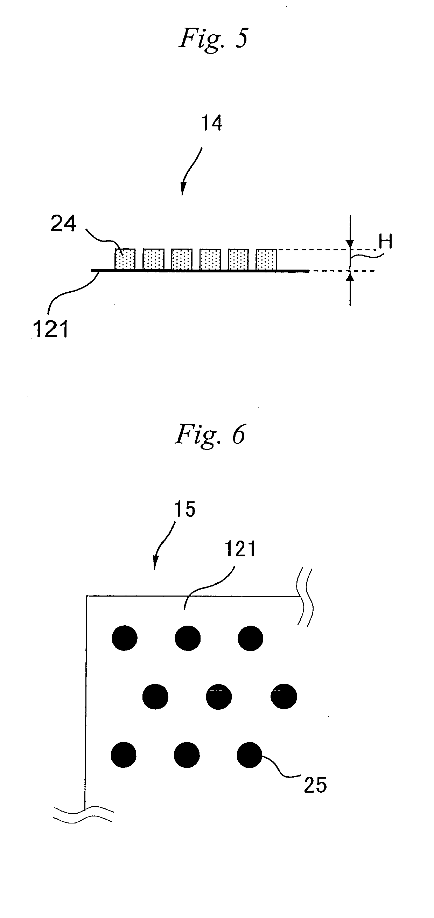

Examples are shown in Fig. 3 to Fig. 5, in which the separation membranes 12 to 14 are all provided with a flat separation membrane body 121 but in which the cross-section shape of the discontinuous member differs. Specifically, the cross section of the discontinuous member 22 in Fig. 3 has a round top and a rectangular bottom. The cross section of the discontinuous member 23 in Fig. 4 is trapezoidal. The cross section of the discontinuous member 24 in Fig. 5 is rectangular.

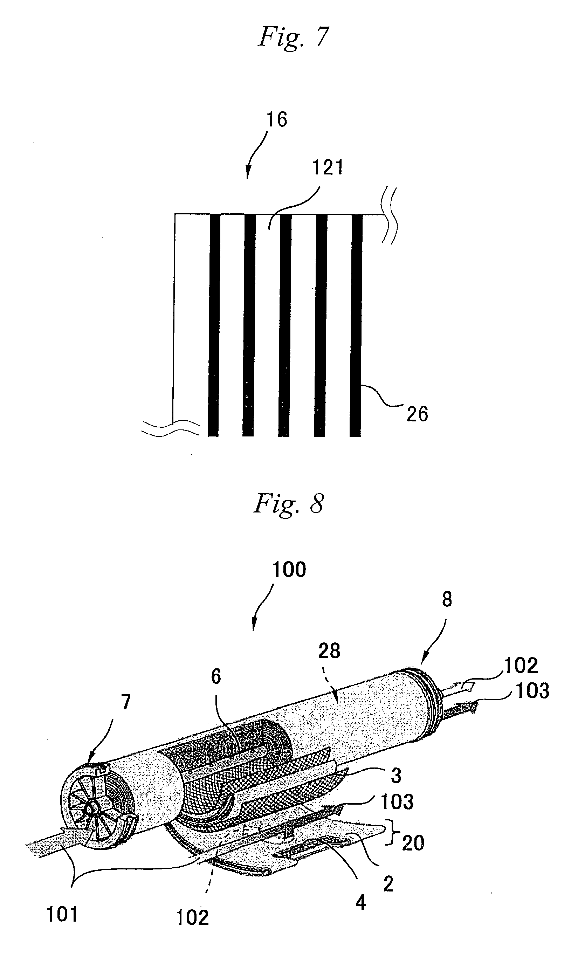

The separation membranes 15 and 16 shown in Fig. 6 and Fig. 7 each have, as the discontinuous member therein, a circular dot-like member 25 and a wall-like member 26. The cross section in Fig. 3 to Fig. 5 may be applied to any configuration in Fig. 6 and Fig. 7.

The method of arranging the discontinuous different material on the feed side and/or the permeate side of the separation membrane is not specifically defined. For example, employable is a method of coating, printing or spraying with a hot-melt resin.

Arranging the discontinuous different material on the feed side and/or the permeate side of the separation membrane makes it possible to plan a membrane element excellent in pressure resistance and flow stability. Further, when a high-temperature fluid is treated, the passage material moves little on the surface of the membrane as compared with the combination with a conventional passage material such as net, tricot or the like, and therefore the passage material can prevent the membrane from being scratched and the salt removal ratio of the membrane is dramatically stabilized.

<Effect of Height Difference>

The following description shall apply to various types of separation membranes having height differences irrespective of the formation method for the height differences and of the shape of the height differences.

The height differences (difference in height between convex part and concave part) on the feed side and/or the permeate side of the separation membrane can be varied so as to satisfy the necessary separation characteristics and water permeation performance. The height differences can be controlled, for example, by changing the pressure heat treatment condition in embossing, but in a case of arranging a discontinuous different material in a hot-melt method, the height differences can be controlled freely by changing the treatment temperature.

However, when the height differences on the feed side of the separation membrane are too great, then the flow resistance could be small, but when the membrane is incorporated in an element, the number of the membrane leaves capable of being filled in the vessel would reduce. When the height differences are small, the flow resistance of the passages increases and therefore the separation characteristics and the water permeation performance of the membrane would lower. As a result, the water producing capability of the element may lower and the running cost for increasing the water production amount would increase. Consequently, in consideration of the balance of the above-mentioned performances and of the running cost, the height differences on the feed side of the separation membrane are preferably 80 μm or more, more preferably 100 μm or more. The height differences on the feed side are also preferably 2000 μm or less, more preferably 1000 μm or less, even more preferably 500 μm or less.

The height differences of the separation membrane may be determined by the use of a commercially-available configuration analysis system. For example, using a laser microscope, the cross section of the separation membrane may be analyzed to measure the height differences therein; or using a high-precision configuration analysis system, Keyence's KS-1100, the surface of the separation membrane may be analyzed to measure the height differences therein. As sampled randomly, different sites having different height differences are analyzed, and the total heights are summed up and divided by the number of the analyzed sites to give the average value of the "height differences". In the invention, the height differences may satisfy the above-mentioned range, as measured according to any of the measurement methods described here. A concrete measurement method is described in the section of Examples given hereinunder.

For the same reason as that for the height differences, preferably, the pitch of the height differences in the separation membrane is 0.2 mm or more, more preferably 0.5 mm or more. Also preferably, the pitch is 10 mm or less, more preferably 3 mm or less. Also for the same reason as above, preferably, the pitch is 1/10 times or more the groove width, more preferably 50 times or more. The pitch means the horizontal distance from the highest point of one high part to the highest point of the other adjacent high part on at least one surface of the separation membrane having the height differences thereon.

The ratio of the area of the convex parts at a higher position in the upper and/or lower direction of the surface than the center line of the height differences existing on the feed side and/or the permeate side of the separation membrane, relative to the area thereof seen from the upper part and/or the lower part of the membrane surface (two-dimensional area) may be controlled freely in order to satisfy the necessary separation characteristics and water permeation performance. When the ratio is too high, then the flow resistance may be too large, and if so, even when the membrane is incorporated in an element, the water production amount therethrough would increase. On the other hand, when the ratio is too low, then the flow resistance could be low but the flow homogenization would be difficult and, as a result, there may occur concentration polarization to worsen the performance of the element. From these viewpoints, the ratio is preferably from 5% to 95% relative to the area thereof seen from the upper part of the membrane surface (two-dimensional area), and more preferably from 35% to 85% from the viewpoint of the flow resistance and the passage stability. The ratio is defined as a convex area ratio.

As obvious from the above explanation, the contents disclosed in this document include the following techniques:

(1) A separation membrane containing hydrophilic molecules and having, as formed on at least one surface of the feed side and the permeate side thereof, a height difference of from 80 μm to 2000 μm, in which a weight of the hydrophilic molecules in a bone-dry separation membrane is from 0.1 % to 40% based on the weight of the bone-dry separation membrane from which the weight of the hydrophilic molecules has been subtracted.
(2) The separation membrane according to (1), wherein the hydrophilic molecules are a sugar chain compound or polyalcohols.
(3) The separation membrane according to (2), wherein the sugar chain compound is at least one sugar group selected from monoses, bioses and trioses.
(4) The separation membrane according to (2), wherein the sugar chain compound is at least one compound selected from glucose, sucrose, maltose, lactose, trehalose and raffinose.
(5) The separation membrane according to (2), wherein the polyalcohol is at least one compound selected from polyvinyl alcohol, glycols, glycerin and polyglycerin.
(6) The separation membrane according to any of (1) to (5), wherein a protective layer having at least one hydrophilic group selected from the group consisting of a secondary amine, a hydroxyl group and an ether group is provided on the surface of the feed side of the separation membrane, and, as measured on the feed side of the separation membrane through electron spectroscopy for chemical analysis, a hydroxyl group concentration is within a range of from 0.2 to 0.6 and the carboxyl group concentration is within a range of from 0.001 to 0.03.
(7) A separation membrane having, as formed on at least one surface of a feed side and a permeate side thereof, a height difference of from 80 μm to 2000 μm, which has, on the surface of the feed side, a protective layer having at least one hydrophilic group selected from the group consisting of a secondary amine, a hydroxyl group and an ether group,
in which, as measured on the feed side of the separation membrane through electron spectroscopy for chemical analysis, a hydroxyl group concentration is within a range of from 0.2 to 0.6 and the carboxyl group concentration is within a range of from 0.001 to 0.03.
(8) The separation membrane according to (6) or (7), wherein the protective layer contains, as a main ingredient thereof, a crosslinked product of a water-soluble organic polymer having a hydrophilic group.
(9) The separation membrane according to (8), wherein the water-soluble organic polymer is at least one compound selected from the group consisting of polyvinyl alcohol, partially-saponified product of polyvinyl acetate, polyvinyl pyrrolidone, polyacrylic acid, polyallylamine, polyethyleneimine, polyepiaminohydrin, amine-modified polyepichlorohydrin, polyacrylamide, polyacrylic acid amide, polyethylene glycol and cellulose derivatives.
(10) The separation membrane according to any of (1) to (9), which comprises a substrate and a porous resin layer.
(11) The separation membrane according to any of (1) to (10), wherein the separation membrane comprises a substrate, a porous supporting layer and a separation function layer.
(12) The separation membrane according to (11), wherein the separation function layer contains a crosslinked polyamide as a main ingredient thereof.
(13) The separation membrane according to any of (10) to (12), wherein a ratio of a thickness of the porous resin layer in a convex parts of the surface of the separation membrane to a thickness of the porous resin layer in a concave parts of the surface of the separation membrane is from 0.1 to 0.95, and a ratio of a thickness of the substrate in the convex parts of the surface of the separation membrane to a thickness of the substrate in the concave parts of the surface of the separation membrane is from 0.1 to 0.95. The porous resin layer may be reworded to a porous supporting layer.
(14) The separation membrane according to any of (10) to (13), wherein the substrate is a long-fiber nonwoven fabric.
(15) The separation membrane according to (14), wherein fibers in a surface layer of the long-fiber nonwoven fabric on a side opposite to the porous supporting layer have a higher longitudinal orientation than fibers in a surface layer of the long-fiber nonwoven fabric on a porous supporting layer side.
(16) The separation membrane according to any of (1) to (15), wherein the height difference is imparted by heat treatment under pressure.
(17) The separation membrane according to (16), wherein the heat treatment under pressure is carried out at a temperature of from 50°C to 160°C and under a pressure of from 10 kg/cm to 70 kg/cm.

As obvious from the above explanation, the technical scope of the invention includes a method for producing a separation membrane mentioned below.

(a) A method for producing a separation membrane, the method comprising:

a step of imparting a height difference of from 80 μm to 2000 μm to at least one surface of a feed side and a permeate side of a separation membrane, and
a step of bringing the separation membrane into contact with hydrophilic molecules so that a weight of the hydrophilic molecules in a bone-dry separation membrane is from 0.1 % to 40% based on a weight of the bone-dry separation membrane from which the weight of the hydrophilic molecules has been subtracted.

(b) The method for producing a separation membrane according to (a), wherein the step of imparting a height difference to the separation membrane is carried out after the step of bringing the separation membrane into contact with hydrophilic molecules.
(c) The method for producing a separation membrane according to (a), wherein the step of imparting a height difference to the separation membrane is carried out before the step of bringing the separation membrane into contact with hydrophilic molecules.
(d) The method for producing a separation membrane according to any of (a) to (c), wherein the step of bringing the separation membrane into contact with hydrophilic molecules comprises applying an aqueous solution containing hydrophilic molecules to the separation membrane.
(e) The method for producing a separation membrane according to any of (a) to (d), wherein at least one of a sugar chain compound and polyalcohols is used as the hydrophilic molecules.
(f) The method for producing a separation membrane according to any of (a) to (c), wherein the step of bringing the separation membrane into contact with hydrophilic molecules comprises applying an aqueous solution of a water-soluble organic polymer to the separation membrane and crosslinking the water-soluble organic polymer to form a water-insoluble protective layer.
(g) The method for producing a separation membrane according to any of (a) to (f), wherein in the step of bringing the separation membrane into contact with hydrophilic molecules and the step of imparting a height difference to the separation membrane, a composite separation membrane comprising a substrate, a porous supporting layer and a separation function layer is used.
(h) The method for producing a separation membrane according to any of (a) to (g), which includes a step of imparting the height differences by heat treatment under pressure.
(i) The method for producing a separation membrane according to (h), wherein the heat treatment under pressure is carried out at a temperature of from 50°C to 160°C and under a pressure of from 10 kg/cm to 70 kg/cm.

7. Separation Membrane Element

The separation membrane element may comprise any of the above-mentioned separation membrane. With reference to Fig. 8, one example of the configuration of the separation membrane element is described.
As shown in Fig. 8, the separation membrane element 100 comprises a separation membrane 2, a net 3, a tricot 4, a water-collecting tube 6, a first end plate 7 and a second end plate 8.
Any of the above-mentioned separation membranes is applicable to the separation membrane 2. As stuck together, the separation membrane 2 forms an envelope-like membrane 20. The envelope membrane 20 is spirally wound around the water-collecting tube 6 to form the wound body 28. Any other member of film or the like may be wound around the outer periphery of the wound body 28 for protecting the wound body 28.
The net 3 is arranged so as to face the feed side surface of the separation membrane 2 and is wound around the water-collecting tube 6 along with the separation membrane 2.
The tricot 4 is arranged so as to face the permeate side surface of the separation membrane 2 and is would around the water-collecting tube 6 along with the separation membrane 2.
One or both of the net 3 and the tricot 4 may be omitted.
The water-collecting tube 6 is a hollow cylindrical member and has a plurality of pores in the side thereof.
The first end plate 7 is a disk-like member having a plurality of feed ports. The first end plate 7 is arranged at the first end of the wound body 28.
The second end plate 8 has a discharge spout for concentrated fluid and a discharge spout for permeated fluid. The second end plate 8 is arranged at the second end of the wound body 28.
Fluid separation through the separation membrane element 100 is described. A raw fluid 101 is fed to the wound body 28 via the feed port of the first end plate 7. The raw fluid 101 moves inside the feed-side passages formed of the net 3 on the feed side of the separation membrane 2. The fluid having passed through the separation membrane 2 (this is shown as a permeated fluid 101 in the drawing) moves inside the permeate-side passages formed of the tricot 4. The permeated fluid 102 having reached the water-collecting tube 6 comes into the water-collecting tube 6 via the pores of the water-collecting tube 6. The permeated fluid 102 thus having run inside the water-collecting tube 6 is discharged outside through the second end plate 8. On the other hand, the fluid not having permeated through the separation membrane (this is shown as a concentrated fluid 103 in the drawing) moves through the feed side passages and is discharged out through the second end plate 8. In that manner, the raw fluid 101 is separated into the permeated fluid 102 and the concentrated fluid 103.

Next described is a method for producing a separation membrane element.

The spiral-type separation membrane element comprises a separation membrane and optionally one or more laminates of a feed-side spacer and/or a permeate-side spacer wound around a perforated hollow water-collecting tube. The method for producing a separation membrane element of the invention is not specifically defined. Herein described is one typical method for producing the element, which comprises laminating a polyamide separation function layer on a porous supporting layer and a substrate to give a separation membrane, then shaping it and arranging a permeate-side spacer.

A resin is dissolved in a good solvent, and the resulting resin solution is cast on a substrate and then immersed in pure water thereby forming a porous supporting layer on the substrate. Subsequently, as described above, the separation function layer is formed on the porous supporting layer. Further if desired, for enhancing the separation performance and the permeation performance, this is chemically processed with chlorine, acid, alkali, nitrous acid or the like, and further the monomer and others are washed away to produce a continuous sheet of a separation membrane.

The sheet is brought into contact with hydrophilic molecules to produce a separation membrane containing hydrophilic molecules. Before or after application of the hydrophilic molecules thereto, the separation membrane may be embossed or a different material may be arranged thereon, thereby imparting height differences to the separation membrane.

Using a conventional element production apparatus, for example, an 8-inch element having 26 leaves and having a leaf effective area of 37 $m^2$ is produced. For the element production method, referred to are the methods described in references (JP-B-44-14216, JP-B-4-11928, JP-A-11-226366).

In one embodiment of the element of the invention, leaves each having grooves on the feed side thereof may be so arranged that the grooves of one leaf and the grooves of the other leaf could form the feed-side passages.

The separation membrane of the invention has a low water content, and therefore the adhesive to adhere the leaves absorbs little moisture and the separation membrane is free from foaming by moisture absorption by the adhesive. When the adhesive foams, the porosity per the unit volume of the adhesive may increase and the strength thereof lowers. If so, fluid may leak out through the foamed part in operation under pressure of the element, and the separation membrane element could no more fulfill the function thereof and the recovery ratio of the separation membrane element lowers.

8. Use of Separation Membrane Element

Thus produced, the separation membrane elements are, as connected in series or in parallel, cased in a pressure container to construct a separation membrane module.

Further as combined with a pump to feed a fluid thereto and an apparatus for pretreating the fluid or the like, the separation membrane element and the module can construct a fluid separation apparatus. Using the separation apparatus, for example, fed water can be separated into permeate such as drinkable water and concentrated water not having passed through the membrane, thereby obtaining water that satisfies the intended purpose.

When the operation pressure for the fluid separation apparatus is higher, then the salt removal ratio could be higher. However, in consideration of the increase in the energy necessary for operation and of the maintenance of the feed passages and the permeate passages of the separation membrane element, the operation pressure in applying water to be processed to the separation membrane module is preferably from 0.2 MPa to 5 MPa. When the temperature of the feed water is higher, then the salt removal ratio may lower, but when the temperature is lower, then the permeate flux to run through the membrane also decreased. Therefore, the temperature is preferably from 5°C to 45°C. When the pH of the feed water is higher and in case where the feed water has a high salt concentration such as seawater, scale of magnesium or the like may form and the membrane may be deteriorated during operation at such a high pH. Accordingly, it is desirable that the apparatus is operated in a neutral region.

The fluid to be treated by the separation membrane element is not specifically defined. When the element is used for treatment of water, the feed water includes a liquid mixture having TDS (total dissolved solids) of from 500 mg/L to 100 g/L, such as seawater, brine water, wastewater, etc. In general, TDS indicates total dissolved solids and is represented by "mass/volume" or "ratio by weight". According to the definition, TDS may be computed from the weight of the residues of a solution having passed through a 0.45-micron filter and vaporized at a temperature of from 39.5 to 40.5°C, but in a more simplified manner, TDS can be converted from the practical salinity (S).

EXAMPLES

The invention is described in more detail with reference to the following Examples, however, the invention is not limited at all by these Examples. The results in Examples and Comparative Examples are shown in Table 1 to Table 5.

(Element Recovery Ratio)

The element recovery ratio is as follows. The separation membrane element is tested in an air leak test in water (1.0 MPa). The number of leaves with leakage is counted, and the element recovery ratio is represented by (1 - number of leaves with air leakage)/(number of tested leaves) × 100 (%).

(Amount of Water Production before Chemical Treatment)

The amount of the separation membrane element penetrated water from feed water (brine water at 25°C) is expressed as the amount of water production by the separation membrane element before chemical treatment, in terms of the amount of the permeate (cubic meter) through one separation membrane element in one day ($m^3$/day). The data are shown here in the case where the measured value after 1 hour and the measured value after 8 hours each were at least 1 $m^3$/day.

(Salt Removal Ratio (TDS Removal Ratio) before Chemical Treatment)

The TDS removal ratio was calculated as follows:

$$\text{TDS Removal Ratio before Chemical Treatment (\%)} = 100 \times (1 - \text{TDS concentration in permeate/TDS concentration in feed water})$$

The results are shown here in the case where the measured value after 1 hour and the measured value after 8 hours each provided a change of 0.1 % or less.

(Water Content)

The weight of the separation membrane after drying treatment under the condition shown in Table 1 to Table 5 is referred to as the weight of the separation membrane. The separation membrane was fully washed with a 50% solution of Wako Pure Chemicals' isopropanol diluted in pure water, and dried at 105°C for 2 hours. The weight of the thus-dried separation membrane is referred to as the weight of the bone-dry separation membrane. The water content of the separation membrane is calculated as follows:

$$\text{Water Content} = (\text{weight of separation membrane before bone-drying treatment} - \text{weight of separation membrane in bone-dry state})/\text{weight of separation membrane before bone-drying treatment} \times 100\ (\%)$$

(Weight Ratio of Hydrophilic Molecules to Bone-Dry Separation Membrane)

The separation membrane containing hydrophilic molecules was dried at 105°C for 2 hours (bone-drying treatment), and the weight of the thus-dried separation membrane is referred to as X. The separation membrane not containing hydrophilic molecules was dried at 105°C for 2 hours (bone-drying treatment), and the weight of the thus-dried separation membrane is referred to as Y. The weight ratio is represented by (X - Y)/ Y × 100 (%).

(Concentration of Functional Group Measured on the Feed Side of Separation Membrane)

Using US SSI's SSX-100, the concentration was measured under the following conditions.

Excited X-ray: aluminium $K\alpha 1$, 2 rays (1486.6 eV)
X-ray output: 10 kV 20 mV
Photoelectron ejection angle: 35°
Measured functional groups: carboxyl group, secondary amine, hydroxyl group, primary amine, ether group

Concentration of hydrophilic groups

= (amount of measured hydrophilic groups (total of hydroxyl group, primary amine and ether group) (molar number)/total number of measured carbon atoms (molar number)

In case where the separation membrane is measured from the feed side thereof under the above-mentioned conditions, the peak position of the acid group is extremely near to the peak position of the primary amine, and therefore in the following Table 5, the total of the acid group and the primary amine is shown.

(Water Repermeability)

The separation membrane was brought into contact with a solution of hydrophilic molecules, and then dried under the condition shown in Table 1 to Table 5. Regarding the amount of permeate through the separation membrane element having the thus-dried separation membrane, the amount of permeate (cubic meter) in one day is referred to as the water production amount after drying treatment ($m^3$/day). The water repermeability is the change in the water production amount before and after drying treatment, and is expressed as (water production amount after drying treatment) /(water production amount before drying treatment) × 100 (%). Samples of which the water repermeability is nearer to 100% are membranes that are less influenced by the drying treatment and have better water repermeability.

(Chemical-Resistant Stability)

An aqueous solution of sodium hydroxide conditioned to have pH of 11 at 90°C was applied to the separation membrane element to run therethrough for 10 hours, and then the element was washed with pure water. The amount of the separation membrane element penetrated water from feed water (brine water at 25°C) is expressed as the amount of water production by the separation membrane element after chemical treatment, in terms of the amount of the permeate (cubic meter) through one separation membrane element in one day ($m^3$/day). The chemical-resistant stability is the change in the water production amount before and after chemical treatment, and is expressed as (water production amount after chemical treatment)/(water production amount before chemical treatment) × 100 - 100 (%). Samples of which the change is nearer to 0% are membranes that are less influenced by the chemical treatment and have higher chemical-resistant stability.

(Height Difference on the Feed Side of Separation Membrane)

Using a high-precision configuration analysis system, Keyence's KS-1000, the surface of a separation membrane sample of 5 cm × 5 cm was analyzed and the mean height difference was computed from the found data. 100 sites with height differences were selected at random on the sample surface, and the depth of each site was measured. The sum total of the found data was divided by the number of the total sites to provide the height difference.

(Surface Defect Ratio (failure ratio) on the Feed Side of Separation Membrane)

After formed, the separation membrane was cut into a size of 5 cm × 5 cm, and using an aqueous 500-ppm methyl violet solution, the sample was stained from the surface side of the separation membrane, for 10 minutes. Subsequently, this was washed with running water for 10 minutes, and then dried to give a stained sample. The stained separation membrane was scanned with a digital scanner (Canon's CanoScan™ N676U), and the obtained digital image was analyzed with an image analyzer (Image J). The surface defect ratio of the separation membrane was computed as: surface defect ratio (%) of separation membrane = 100 × (area of stained part of separation membrane/total area of sample). The data of the surface defect ratio of the separation membrane were rounded at the third decimal place thereof.

(Reference Example 1)

Water Production Amount and Salt Removal Ratio of Element before Drying

On a nonwoven fabric of polyester long fibers (fiber size: 1 decitex, thickness: about 90 μm, air permeability: 1 cc/cm$^2$/sec), a solution of 15.0 wt.% polysulfone (solvent: dimethylformamide (N,N-dimethylformamide)) was cast in a thickness of 180 μm, at room temperature (25°C). Immediately, this was dipped in pure water and left therein for 5 minutes to produce a roll of a porous supporting membrane (thickness 130 μm) of a fiber-reinforced polysulfone supporting membrane.

Subsequently, the porous supporting membrane roll was unrolled, and an aqueous solution of 1.8 wt.% m-PDA and 4.5 wt.% ε-caprolactam was applied onto the polysulfone surface. Via an air nozzle, nitrogen was sprayed onto it to thereby remove the excessive aqueous solution from the surface of the supporting membrane, and then an n-decane solution containing 0.06% by weight of trimesic acid chloride at 25°C was applied thereto so that the surface could be completely wetted with the solution. Subsequently, the excessive solution was removed by air blowing from the film, and then the film was washed with hot water at 80°C. Further, air blow was applied thereto for water removal to give a separation film roll.

With that, the separation membrane was folded to have an effective area of 37 m$^2$ in a separation membrane element comprising it, and cut, and a net (thickness: 900 μm, pitch 3 mm × 3 mm) was arranged as the feed-side spacer. In that manner, 26 leaf-like membranes were produced each having a width of 930 mm.

These 26 leaf-like laminates were spirally wound around a water-collecting tube while the end of a permeate-side spacer, tricot (thickness: 300 μm, groove width: 200 μm, ridge width: 300 μm, groove depth: 105 μm) was wound around it, thereby obtaining a wound body. A film was wound around the outer periphery of the wound body, and fixed with a tape, and thereafter the edges were cut, end plates were fixed and a filament winding was arranged to produce an 8-inch element.

The element was put into a pressure vessel, and raw water of 500 mg/L brine solution was applied thereto under an operating pressure of 0.7 MPa and an operating temperature of 25°C at pH 7 (recovery ratio 15%), whereupon the water production amount and the salt removal ratio were 41.7 m$^3$/day and 98.0%, respectively.

(Example 1)

A separation membrane roll was produced according to the same method as in Reference Example 1, and the separation membrane roll was immersed in an aqueous solution of 7% polyglycerin (20-mer) (Daicel Chemical's trade name: PGLX) at 25°C for 2 minutes, and the dried at 80°C for 5 minutes. Next, using a rhombic pattern emboss roll, the separation membrane was embossed at 110°C and under 40 kg/cm, thereby imparting height differences to the feed side of the separation membrane (by embossing). Further, an ethylene/vinyl acetate copolymer resin (trade name; 703A) was hot-melted to the permeate side of the membrane, thereby imparting dots having a height of 230 μm thereto, or that is, the surface of the membrane was imparted height differences of a different material (by dot formation).

Here, 200 dots were analyzed for the horizontal distance from the highest point of one convex part to the highest point of the other adjacent convex part on the feed side of the separation membrane, and the found data were averaged to obtain the pitch of the emboss pattern.

After embossing, the surface defect ratio was 0.69%, and the water content of the separation membrane roll after drying treatment and the weight ratio of the hydrophilic molecules to the bone-dry separation membrane were 5.0% and 6.3%, respectively.

According to the same method as in Reference Example 1, the separation membrane roll of Example 1 was incorporated into an 8-inch element, and the element was operated under the same condition as in Reference Example 1. The water production amount and the salt removal ratio were 37.9 m$^3$/day and 97.0%, respectively. The water repermeability was 90.2%, or that is, the membrane secured a high water production amount even after drying. The recovery ratio was 99.0%, and the water production amount change before and after chemical treatment was 4.1 %. Thus, the separation membrane secured good water repermeability after forming and drying.

(Example 2)

A separation membrane roll was produced according to the same method as in Example 1, except that the separation membrane was brought into contact with a moisturizer and then dried after embossing and dot formation. As a result, the surface defect ratio of the obtained separation membrane was 1.39%. The water content of the separation membrane roll after drying treatment and the weight ratio of the hydrophilic molecules to the bone-dry separation membrane were 5.0% and 6.2%, respectively.

An 8-inch element was produced according to the same method as in Reference Example 1, and operated under the same condition as in Reference Example 1. The water production amount and the salt removal ratio were 40.1 $m^3$/day and 94.5%, respectively. The water repermeability was 95.5%, or that is, the membrane secured a high water production amount even after drying. The recovery ratio was 96.5%, and the water production amount change before and after chemical treatment was 13.2%. Thus, the separation membrane secured good water repermeability after forming and drying.

(Example 3)

A separation membrane roll was produced according to the same method as in Example 1, except that the feed-side surface of the separation membrane was not embossed but, as the spacer, net (thickness: 900 μm, pitch: 3 mm × 3 mm) was used. The water content of the separation membrane roll after drying treatment and the weight ratio of the hydrophilic molecules to the bone-dry separation membrane were 5.0% and 6.4%, respectively.

An 8-inch element was produced according to the same method as in Reference Example 1, and operated under the same condition as in Reference Example 1. The water production amount and the salt removal ratio were 37.0 $m^3$/day and 97.8%, respectively. The water repermeability was 88.1%, or that is, the membrane secured a high water production amount even after drying. The recovery ratio was 99.3%, and the water production amount change before and after chemical treatment was 2.0%. Thus, the separation membrane secured good water repermeability after forming and drying.

(Example 4)

A separation membrane roll was produced according to the same method as in Example 1, except that the permeate-side surface of the separation membrane was not processed for dot formation thereon but, as the spacer, tricot (thickness: 300 μm, groove width: 200 μm, ridge width: 300 μm, groove depth: 105 μm) was used. The water content of the separation membrane roll after drying treatment and the weight ratio of the hydrophilic molecules to the bone-dry separation membrane were 5.0% and 6.3%, respectively.

An 8-inch element was produced according to the same method as in Reference Example 1, and operated under the same condition as in Reference Example 1. The water production amount and the salt removal ratio were 37.6 $m^3$/day and 97.2%, respectively. The water repermeability was 89.5%, or that is, the membrane secured a high water production amount even after drying. The recovery ratio was 99.1 %, and the water production amount change before and after chemical treatment was 3.7%. Thus, the separation membrane secured good water repermeability after forming and drying.

(Example 5)

A separation membrane roll was produced according to the same method as in Example 3, except that the drying temperature was 110°C. The water content of the separation membrane roll after drying treatment and the weight ratio of the hydrophilic molecules to the bone-dry separation membrane were 5.0% and 4.5%, respectively.

An 8-inch element was produced according to the same method as in Reference Example 1, and operated under the same condition as in Reference Example 1. The water production amount and the salt removal ratio were 35.3 $m^3$/day and 98.0%, respectively. The water repermeability was 84.0%, or that is, the membrane secured a high water production amount even after drying. The recovery ratio was 99.2%, and the water production amount change before and after chemical treatment was 2.2%. Thus, the separation membrane secured good water repermeability after drying.

(Example 6)

A separation membrane roll was produced according to the same method as in Example 3, except that the drying temperature was 140°C. The water content of the separation membrane roll after drying treatment and the weight ratio of the hydrophilic molecules to the bone-dry separation membrane were 5.0% and 3.0%, respectively.

An 8-inch element was produced according to the same method as in Reference Example 1, and operated under the same condition as in Reference Example 1. The water production amount and the salt removal ratio were 33.6 $m^3$/day and 98.2%, respectively. The water repermeability was 80.0%, or that is, the membrane secured a high water production amount even after drying. The recovery ratio was 99.1 %, and the water production amount change before and after chemical treatment was 2.2%. Thus, the separation membrane secured good water repermeability after drying.

(Example 7)

A separation membrane roll was produced according to the same method as in Example 1, except that glycerin was used as the moisturizer. The water content of the separation membrane roll after drying treatment and the weight ratio of the hydrophilic molecules to the bone-dry separation membrane were 4.7% and 6.3%, respectively.
An 8-inch element was produced according to the same method as in Reference Example 1, and operated under the same condition as in Reference Example 1. The water production amount and the salt removal ratio were 37.5 $m^3$/day and 97.0%, respectively. The water repermeability was 89.3%, or that is, the membrane secured a high water production amount even after drying. The recovery ratio was 99.0%, and the water production amount change before and after chemical treatment was 4.3%. Thus, the separation membrane secured good water repermeability after forming and drying.

(Example 8)

A separation membrane roll was produced according to the same method as in Example 7, except that the feed-side surface of the separation membrane was not embossed but, as the spacer, net (thickness: 900 μm, pitch: 3 mm × 3 mm) was used. The water content of the separation membrane roll after drying treatment and the weight ratio of the hydrophilic molecules to the bone-dry separation membrane were 4.7% and 6.3%, respectively.
An 8-inch element was produced according to the same method as in Reference Example 1, and operated under the same condition as in Reference Example 1. The water production amount and the salt removal ratio were 36.9 $m^3$/day and 97.6%, respectively. The water repermeability was 87.9%, or that is, the membrane secured a high water production amount even after drying. The recovery ratio was 99.4%, and the water production amount change before and after chemical treatment was 2.5%. Thus, the separation membrane secured good water repermeability after drying.

(Example 9)

A separation membrane roll was produced according to the same method as in Example 1, except that trehalose was used as the moisturizer. The water content of the separation membrane roll after drying treatment and the weight ratio of the hydrophilic molecules to the bone-dry separation membrane were 4.9% and 6.3%, respectively.
An 8-inch element was produced according to the same method as in Reference Example 1, and operated under the same condition as in Reference Example 1. The water production amount and the salt removal ratio were 37.5 $m^3$/day and 96.7%, respectively. The water repermeability was 89.3%, or that is, the membrane secured a high water production amount even after drying. The recovery ratio was 99.1%, and the water production amount change before and after chemical treatment was 5.0%. Thus, the separation membrane secured good water repermeability after forming and drying.

(Example 10)

A separation membrane roll was produced according to the same method as in Example 9, except that the feed side surface of the separation membrane was not embossed but, as the spacer, net (thickness: 900 μm, pitch: 3 mm × 3 mm) was used. The water content of the separation membrane roll after drying treatment and the weight ratio of the hydrophilic molecules to the bone-dry separation membrane were 4.9% and 6.4%, respectively.
An 8-inch element was produced according to the same method as in Reference Example 1, and operated under the same condition as in Reference Example 1. The water production amount and the salt removal ratio were 37.1 $m^3$/day and 97.1%, respectively. The water repermeability was 88.3%, or that is, the membrane secured a high water production amount even after drying. The recovery ratio was 99.3%, and the water production amount change before and after chemical treatment was 2.4%. Thus, the separation membrane secured good water repermeability after drying.

(Example 11)

A separation membrane roll was produced according to the same method as in Example 1, except that polyvinyl alcohol was used as the moisturizer. The water content of the separation membrane roll after drying treatment and the weight ratio of the hydrophilic molecules to the bone-dry separation membrane were 4.2% and 6.4%, respectively.
An 8-inch element was produced according to the same method as in Reference Example 1, and operated under the same condition as in Reference Example 1. The water production amount and the salt removal ratio were 35.2 $m^3$/day and 97.1%, respectively. The water repermeability was 83.8%, or that is, the membrane secured a high water production amount even after drying. The recovery ratio was 99.1 %, and the water production amount change before and after chemical treatment was 4.5%. Thus, the separation membrane secured good water repermeability after forming and drying.

(Example 12)

A separation membrane roll was produced according to the same method as in Example 10, except that the feed-side surface of the separation membrane was not embossed but, as the spacer, net (thickness: 900 $\mu$m, pitch: 3 mm $\times$ 3 mm) was used. The water content of the separation membrane roll after drying treatment and the weight ratio of the hydrophilic molecules to the bone-dry separation membrane were 4.2% and 6.4%, respectively.
An 8-inch element was produced according to the same method as in Reference Example 1, and operated under the same condition as in Reference Example 1. The water production amount and the salt removal ratio were 33.7 $m^3$/day and 97.3%, respectively. The water repermeability was 80.2%, or that is, the membrane secured a high water production amount even after drying. The recovery ratio was 99.5%, and the water production amount change before and after chemical treatment was 2.2%. Thus, the separation membrane secured good water repermeability after drying.

(Example 13)

A separation membrane roll was produced according to the same method as in Example 1, except that galactose was used as the moisturizer. The water content of the separation membrane roll after drying treatment and the weight ratio of the hydrophilic molecules to the bone-dry separation membrane were 4.2% and 6.2%, respectively.
An 8-inch element was produced according to the same method as in Reference Example 1, and operated under the same condition as in Reference Example 1. The water production amount and the salt removal ratio were 37.0 $m^3$/day and 96.7%, respectively. The water repermeability was 88.1%, or that is, the membrane secured a high water production amount even after drying. The recovery ratio was 98.9%, and the water production amount change before and after chemical treatment was 5.5%. Thus, the separation membrane secured good water repermeability after forming and drying.

(Example 14)

A separation membrane roll was produced according to the same method as in Example 13, except that the feed-side surface of the separation membrane was not embossed but, as the spacer, net (thickness: 900 $\mu$m, pitch: 3 mm $\times$ 3 mm) was used. The water content of the separation membrane roll after drying treatment and the weight ratio of the hydrophilic molecules to the bone-dry separation membrane were 4.2% and 6.3%, respectively.
An 8-inch element was produced according to the same method as in Reference Example 1, and operated under the same condition as in Reference Example 1. The water production amount and the salt removal ratio were 33.6 $m^3$/day and 96.9%, respectively. The water repermeability was 80.0%, or that is, the membrane secured a high water production amount even after drying. The recovery ratio was 99.1 %, and the water production amount change before and after chemical treatment was 4.0%. Thus, the separation membrane secured good water repermeability after drying.

(Example 15)

A separation membrane roll was produced according to the same method as in Example 1, except that diethylene glycol was used as the moisturizer. The water content of the separation membrane roll after drying treatment and the weight ratio of the hydrophilic molecules to the bone-dry separation membrane were 4.1 % and 5.9%, respectively.
An 8-inch element was produced according to the same method as in Reference Example 1, and operated under the same condition as in Reference Example 1. The water production amount and the salt removal ratio were 36.2 $m^3$/day and 96.9%, respectively. The water repermeability was 86.2%, or that is, the membrane secured a high water production amount even after drying. The recovery ratio was 99.0%, and the water production amount change before and after chemical treatment was 4.8%. Thus, the separation membrane secured good water repermeability after forming and drying.

(Example 16)

A separation membrane roll was produced according to the same method as in Example 15, except that the feed-side surface of the separation membrane was not embossed but, as the spacer, net (thickness: 900 $\mu$m, pitch: 3

mm × 3 mm) was used. The water content of the separation membrane roll after drying treatment and the weight ratio of the hydrophilic molecules to the bone-dry separation membrane were 4.1 % and 6.2%, respectively.

An 8-inch element was produced according to the same method as in Reference Example 1, and operated under the same condition as in Reference Example 1. The water production amount and the salt removal ratio were 34.9 $m^3$/day and 97.3%, respectively. The water repermeability was 83.1%, or that is, the membrane secured a high water production amount even after drying. The recovery ratio was 99.1 %, and the water production amount change before and after chemical treatment was 3.7%. Thus, the separation membrane secured good water repermeability after drying.

(Example 17)

A separation membrane roll was produced according to the same method as in Example 1, except that the polyglycerin concentration was 3% and the contact time was 8 seconds. The water content of the separation membrane roll after drying treatment and the weight ratio of the hydrophilic molecules to the bone-dry separation membrane were 5.0% and 0.3%, respectively.

An 8-inch element was produced according to the same method as in Reference Example 1, and operated under the same condition as in Reference Example 1. The water production amount and the salt removal ratio were 34.6 $m^3$/day and 97.3%, respectively. The water repermeability was 82.4%, or that is, the membrane secured a high water production amount even after drying. The recovery ratio was 98.8%, and the water production amount change before and after chemical treatment was 2.0%. Thus, the separation membrane secured good water repermeability after forming and drying.

(Example 18)

A separation membrane roll was produced according to the same method as in Example 1, except that the polyglycerin concentration was 30% and the contact time was 180 seconds. The water content of the separation membrane roll after drying treatment and the weight ratio of the hydrophilic molecules to the bone-dry separation membrane were 5.0% and 39.6%, respectively.

An 8-inch element was produced according to the same method as in Reference Example 1, and operated under the same condition as in Reference Example 1. The water production amount and the salt removal ratio were 36.6 $m^3$/day and 97.4%, respectively. The water repermeability was 87.1%, or that is, the membrane secured a high water production amount even after drying. The recovery ratio was 99.1 %, and the water production amount change before and after chemical treatment was 1.8%. Thus, the separation membrane secured good water repermeability after forming and drying.

(Example 19)

An element was produced according to the same method as in Example 1, except that the substrate was changed to one having a fiber orientation degree of 20° in the surface layer on the porous supporting layer side and 40° in the surface layer opposite to the porous supporting layer. The water content of the separation membrane roll after drying treatment and the weight ratio of the hydrophilic molecules to the bone-dry separation membrane were 4.9% and 6.3%, respectively.

An 8-inch element was produced according to the same method as in Reference Example 1, and operated under the same condition as in Reference Example 1. The water production amount and the salt removal ratio were 37.7 $m^3$/day and 97.3%, respectively. Since the surface defects in film formation reduced, the salt removal ratio increased. The water repermeability was 89.8%, or that is, the membrane secured a high water production amount even after drying. The recovery ratio was 99.1 %, and the water production amount change before and after chemical treatment was 4.0%. Thus, the separation membrane secured good water repermeability after forming and drying.

(Example 20)

An 8-inch element was produced according to the same method as in Reference Example 1 except that the separation membrane roll production step was changed as follows, and the element was operated under the same condition as in Reference Example 1. On a nonwoven fabric of polyester fibers (fiber size: 1 decitex, thickness: about 90 $\mu$m, air permeability: 1 cc/$cm^2$/sec), a solution of 20.0 wt.% polysulfone in dimethylformamide (N,N-dimethylformamide) was cast in a thickness of 180 $\mu$m, at room temperature (25°C). Immediately, this was dipped in pure water and left therein for 5 minutes to produce a roll of a porous supporting membrane (thickness 130 $\mu$m) of a fiber-reinforced polysulfone supporting membrane.

While the porous resin roll was unrolled (uncoiled), and an aqueous solution of 1.8 wt.% m-PDA and 4.5 wt.% ε-caprolactam was applied onto the polysulfone surface. Via an air nozzle, nitrogen was sprayed onto it to thereby remove the excessive aqueous solution from the surface of the supporting membrane, and then an n-decane solution containing 0.06% by weight of trimesic acid chloride at 25°C was applied thereto so that the surface could be completely wetted with the solution. Subsequently, the excessive solution was removed by air blowing from the film, and a decane solution containing 0.06% by weight of trimesic acid chloride and 0.048 % by weight of trimellitic acid anhydride chloride (molar ratio, 1) was applied thereto in such a manner that the surface could be completely wetted with the solution. Next, the excessive solution was removed by keeping the membrane vertically, and then the membrane was dipped in an aqueous solution containing 1% by weight of sodium carbonate and 0.3% by weight of sodium lauryl sulfate.

Next, a hydrophilic protective film was formed. Specifically, an aqueous solution containing 0.1 % by weight of polyethyleneimine (weight-average molecular weight 600) was applied to the surface of the untreated membrane and then dried at 60°C for 30 second with a hot air drier. Next, for coating the separation membrane with a hydrophilic protective layer, an aqueous solution prepared by adding, as an acid catalyst, hydrochloric acid to be 0.1 mol/L to an aqueous solution containing 1.0% by weight of polyvinyl alcohol (weight-average molecular weight 2,000) and 0.114% by weight of glutaraldehyde was applied to the surface of the membrane. Subsequently, this was thermally crosslinked with a hot air drier at 80°C, thereby forming a water-insoluble protective layer.

Subsequently, for removing the uncrosslinked substance and the acid catalyst, the membrane was washed with hot water at 70°C, thereby obtaining a separation membrane roll. Using the separation membrane roll and in the same manner as in Reference Example 1, an 8-inch element was produced. Thus obtained, the 8-inch element was operated under the same condition as in Reference Example 1. The water production amount and the salt removal ratio were 46.6 $m^3$/day and 98.2%, respectively.

Next, the separation membrane roll was dried at 80°C for 3 minutes and embossed with a rhombic pattern embossing roll at 110°C and under a pressure of 40 kg/cm thereby imparting height differences to the feed side of the separation membrane (by embossing). An ethylene/vinyl acetate copolymer resin (trade name: 703A) was hot-melted on the permeate side of the membrane, thereby giving dots having a height of 230 μm thereto, and the surface of the membrane was thus given height differences (by dot formation). Here, 200 dots were analyzed for the horizontal distance from the highest point of one convex part to the highest point of the other adjacent convex part on the feed side of the separation membrane, and the found data were averaged to obtain the pitch of the emboss pattern.

After embossing, the surface defect ratio was 0.65%.

The water content of the separation membrane roll after drying treatment and the weight ratio of the hydrophilic molecules to the bone-dry separation membrane were 4.2% and 6.4%, respectively.

The water production amount and the salt removal ratio were 45.2 $m^3$/day and 97.8%, respectively. The water repermeability was 97.0%, or that is, the membrane secured a high water production amount even after drying. The recovery ratio was 97.5%, and the water production amount change before and after chemical treatment was 2.0%. Thus, the separation membrane secured good water repermeability after forming and drying.

(Example 21)

A separation membrane roll was produced according to the same method as in Example 20, except that the feed-side surface of the separation membrane was not embossed but, as the spacer, net (thickness: 900 μm, pitch: 3 mm × 3 mm) was used. The water content of the separation membrane roll after drying treatment and the weight ratio of the hydrophilic molecules to the bone-dry separation membrane were 4.2% and 6.4%, respectively.

An 8-inch element was produced according to the same method as in Reference Example 1, and operated under the same condition as in Reference Example 1. The water production amount and the salt removal ratio were 43.0 $m^3$/day and 97.9%, respectively. The water repermeability was 92.3%, or that is, the membrane secured a high water production amount even after drying. The recovery ratio was 98.2%, and the water production amount change before and after chemical treatment was 1.6%. Thus, the separation membrane secured good water repermeability after drying.

(Example 22)

A separation membrane roll was produced according to the same method as in Example 20, except that an aqueous solution prepared by adding, as an acid catalyst, hydrochloric acid to be 0.2 mol/L to an aqueous solution containing 2.0% by weight of polyvinyl alcohol (weight-average molecular weight 2,000) and 0.173% by weight of glutaraldehyde was applied to the surface of the membrane. After embossing, the surface defect ratio was 0.55%. The water content of the separation membrane roll after drying treatment and the weight ratio of the hydrophilic molecules to the bone-dry separation membrane were 4.6% and 6.6%, respectively.

An 8-inch element was produced according to the same method as in Example 20, and operated under the same condition as in Reference Example 1. The water production amount and the salt removal ratio were 46.1 $m^3$/day and 97.0%, respectively. The water repermeability was 98.9%, or that is, the membrane secured a high water production amount even after drying. The recovery ratio was 97.7%, and the water production amount change before and after chemical treatment was 1.8%. Thus, the separation membrane secured good water repermeability after forming and drying.

(Example 23)

A separation membrane roll was produced according to the same method as in Example 20, except that an aqueous solution prepared by adding, as an acid catalyst, hydrochloric acid to be 0.22 mol/L to an aqueous solution containing 2.6% by weight of polyvinyl alcohol (weight-average molecular weight 2,000) and 0.196% by weight of glutaraldehyde was applied to the surface of the membrane. After embossing, the surface defect ratio was 0.50%. The water content of the separation membrane roll after drying treatment and the weight ratio of the hydrophilic molecules to the bone-dry separation membrane were 5.1 % and 6.9%, respectively.

An 8-inch element was produced according to the same method as in Reference Example 1, and operated under the same condition as in Reference Example 1. The water production amount and the salt removal ratio were 46.4 $m^3$/day and 97.0%, respectively. The water repermeability was 99.6%, or that is, the membrane secured a high water production amount even after drying. The recovery ratio was 97.9%, and the water production amount change before and after chemical treatment was 1.7%. Thus, the separation membrane secured good water repermeability after forming and drying.

(Example 24)

A separation membrane roll was produced according to the same method as in Example 20, except that an aqueous solution prepared by adding, as an acid catalyst, hydrochloric acid to be 0.08 mol/L to an aqueous solution containing 0.63% by weight of polyvinyl alcohol (weight-average molecular weight 2,000) and 0.087% by weight of glutaraldehyde was applied to the surface of the membrane. After embossing, the surface defect ratio was 0.71%. The water content of the separation membrane roll after drying treatment and the weight ratio of the hydrophilic molecules to the bone-dry separation membrane were 4.9% and 5.5%, respectively.

An 8-inch element was produced according to the same method as in Reference Example 1, and operated under the same condition as in Reference Example 1. The water production amount and the salt removal ratio were 43.5 $m^3$/day and 97.7%, respectively. The water repermeability was 93.3%, or that is, the membrane secured a high water production amount even after drying. The recovery ratio was 97.3%, and the water production amount change before and after chemical treatment was 2.6%. Thus, the separation membrane secured good water repermeability after forming and drying.

(Example 25)

While unrolled, a porous resin roll was immersed in an aqueous solution containing 3.0% by weight of m-phenylenediamine for 1 minute, and then the excessive aqueous solution was removed from the surface of the membrane. Next, a decane solution containing containing 0.06% by weight of trimesic acid chloride was applied thereto so that the surface could be completely wetted with the solution. According to the same method as in Example 20 except for the step, a separation membrane roll was produced. The surface defect ratio of the membrane was 1.43%. The water content of the separation membrane roll after drying treatment and the weight ratio of the hydrophilic molecules to the bone-dry separation membrane were 4.0% and 4.5%, respectively.

An 8-inch element was produced according to the same method as in Reference Example 1, and operated under the same condition as in Reference Example 1. The water production amount and the salt removal ratio were 44.8 $m^3$/day and 94.6%, respectively. The water repermeability was 96.1 %, or that is, the membrane secured a high water production amount even after drying. The recovery ratio was 94.9%, and the water production amount change before and after chemical treatment was 15.1 %. Thus, the separation membrane secured good water repermeability after forming and drying.

(Comparative Example 1)

A separation membrane roll was produced according to the same method as in Example 1, except that the contact treatment with aqueous 7% polyglycerin solution and the drying treatment were omitted. The surface defect ratio was 1.51%. The water content of the separation membrane roll after drying treatment was 51.2%

An 8-inch element was produced according to the same method as in Reference Example 1, and operated under the same condition as in Reference Example 1. The water production amount and the salt removal ratio were 43.6 $m^3$/day and 93.3%, respectively. The recovery ratio was 94.2%, and the water production amount change before and after chemical treatment was 15.8%. Namely, the surface defect ratio and the recovery ratio lowered and the water production amount change before and after chemical treatment were worsened.

(Comparative Example 2)

A separation membrane roll was produced according to the same method as in Example 1, except that the contact treatment with aqueous 7% polyglycerin solution was omitted. The water content of the separation membrane roll after drying treatment was 5.0%

An 8-inch element was produced according to the same method as in Reference Example 1, and operated under the same condition as in Reference Example 1. The water production amount and the salt removal ratio were 11.8 $m^3$/day and 94.1%, respectively. The water repermeability was 28.1%, the surface defect ratio was 1.49%, the recovery ratio was 94.9%, the water production amount change before and after chemical treatment was 15.1 %, and the water production amount greatly lowered.

(Comparative Example 3)

A separation membrane roll was produced according to the same method as in Example 3, except that the contact treatment with aqueous 7% polyglycerin solution and the drying treatment were omitted. The water content of the separation membrane roll after drying treatment was 51.2%

An 8-inch element was produced according to the same method as in Reference Example 1, and operated under the same condition as in Reference Example 1. The water production amount and the salt removal ratio were 43.3 $m^3$/day and 94.5%, respectively. The surface defect ratio was 1.40%, the recovery ratio was 95.1%, and the water production amount change before and after chemical treatment was 12.4%. Namely, the surface defect ratio was high, the recovery ratio and the water production amount change before and after chemical treatment were worsened.

(Comparative Example 4)

A separation membrane roll was produced according to the same method as in Example 1, except that the polyglycerin concentration was 1% and the contact time was 2 seconds. The water content of the separation membrane roll after drying treatment and the weight ratio of the hydrophilic molecules to the bone-dry separation membrane were 5.0% and 0.05%, respectively.

An 8-inch element was produced according to the same method as in Reference Example 1, and operated under the same condition as in Reference Example 1. The water production amount and the salt removal ratio were 25.4 $m^3$/day and 95.4%, respectively. The water repermeability was 60.5%, the surface defect ratio was 1.03%, the recovery ratio was 95.0%, and the water production amount change before and after chemical treatment was 8.9%. Namely, the surface defect ratio was high, the recovery ratio, the water repermeability and the water production amount change before and after chemical treatment were worsened.

(Comparative Example 5)

A separation membrane roll was produced according to the same method as in Example 1, except that the polyglycerin concentration was 42% and the contact time was 200 seconds. The surface defect ratio of the separation membrane was 1.30%. The water content of the separation membrane roll after drying treatment and the weight ratio of the hydrophilic molecules to the bone-dry separation membrane were 5.0% and 48.9%, respectively.

An 8-inch element was produced according to the same method as in Reference Example 1, and operated under the same condition as in Reference Example 1. The water production amount and the salt removal ratio were 40.2 $m^3$/day and 96.0%, respectively. The water repermeability was 95.7%, the recovery ratio was 95.4%, and the water production amount change before and after chemical treatment was 5.5%. The surface defect ratio was high, the recovery ratio and the water production amount change before and after chemical treatment were worsened.

As described above, the separation membrane elements obtained according to the invention have high water production performance and excellent removal performance and water repermeability.

| | | Example 1 | Example 2 | Example 3 | Example 4 | Example 5 | Example 6 | Example 7 |
|---|---|---|---|---|---|---|---|---|
| Hydrophilic Molecules | compound | polyglycerin (20-mer) | polyglycerin (20-mer) | polyglycerin (20-mer) | polyglycerin (20-mer) | polyglycerin (20-mer) | polyglycerin (20-mer) | glycerin |
| | solvent | water | water | water | water | water | water | water |
| | concentration (%) | 7 | 7 | 7 | 7 | 7 | 7 | 7 |
| Contact Treatment | stage (before/ after treatment for formation of height differences | before | after | before | before | before | before | before |
| | temperature (°C) | 25 | 25 | 25 | 25 | 25 | 25 | 25 |
| | time (sec) | 60 | 60 | 60 | 60 | 60 | 60 | 60 |
| Drying | temperature (°C) | 80 | 80 | 80 | 80 | 110 | 140 | 80 |
| | time (min) | 5.0 | 5.0 | 5.0 | 5.0 | 5.0 | 5.0 | 5.0 |
| | water content of membrane (%) | 5.0 | 5.0 | 5.0 | 5.0 | 5.0 | 5.0 | 4.7 |
| | weight ratio of hydrophilic molecules to bone-dry separation membrane (%) | 6.3 | 6.2 | 6.4 | 6.3 | 4.5 | 3.0 | 6.3 |

(continued)

| | | Example 1 | Example 2 | Example 3 | Example 4 | Example 5 | Example 6 | Example 7 |
|---|---|---|---|---|---|---|---|---|
| Feed side Surface | method for formation of height differences | embossing | embossing | - | embossing | - | - | embossing |
| | emboss pattern | net-like | net-like | - | net-like | - | - | net-like |
| | embossing temperature (°C) | 130 | 130 | - | 130 | - | - | 130 |
| | linear pressure (kg/cm) | 60 | 60 | - | 60 | - | - | 60 |
| | spacer | - | - | net | - | net | net | - |
| | height difference (μm) | 400 | 400 | - | 400 | - | - | 400 |
| | groove width (mm) | 1 | 1 | - | 1 | - | - | 1 |
| | pitch (mm) | 3 | 3 | - | 3 | - | - | 3 |
| | convex surface ratio (%) | 65 | 65 | - | 65 | - | - | 65 |
| Permeate-Side Surface | spacer | | - - | - | tricot | - | - | - |
| | method for formation of height differences | hot-melt | hot-melt | hot-melt | - | hot-melt | hot-melt | hot-melt |
| | height difference (μm) | 230 | 230 | 230 | - | 230 | 230 | 230 |
| | groove width (mm) | 1 | 1 | 1 | - | 1 | 1 | 1 |
| | pitch (mm) | 3 | 3 | 3 | - | 3 | 3 | 3 |
| | convex surface ratio (%) | 65 | 65 | 65 | - | 65 | 65 | 65 |

(continued)

| | | Example 1 | Example 2 | Example 3 | Example 4 | Example 5 | Example 6 | Example 7 |
|---|---|---|---|---|---|---|---|---|
| Surface defect ratio (%) | | 0.69 | 1.39 | 0.36 | 0.60 | 0.34 | 0.35 | 0.72 |
| Element Performance (with no drying treatment) | water production amount ($m^3$/day) | 41.7 | | | | | | |
| | salt removal ratio (%) | 98.0 | | | | | | |
| Element Performance (after drying treatment) | water production amount ($m^3$/day) | 37.9 | 40.1 | 37.0 | 37.6 | 35.3 | 33.8 | 37.5 |
| | salt removal ratio (%) | 97.0 | 94.5 | 97.8 | 97.2 | 98.0 | 98.2 | 97.0 |
| | water repermeability (%) | 90.2 | 95.5 | 88.1 | 89.5 | 84.0 | 80.0 | 89.3 |
| | recovery ratio (%) | 99.0 | 96.5 | 99.3 | 99.1 | 99.2 | 99.1 | 99.0 |
| | water production amount change before and after chemical treatment (%) | 4.1 | 13.2 | 2.0 | 3.7 | 2.2 | 2.2 | 4.3 |

Table 2

| | | Example 8 | Example 9 | Example 10 | Example 11 | Example 12 | Example 13 | Example 14 |
|---|---|---|---|---|---|---|---|---|
| Hydrophilic Molecules | compound | glycerin | trehalose | trehalose | polyvinyl alcohol | polyvinyl alcohol | galactose | galactose |
| | solvent | water | water | water | water | water | water | water |
| | concentration (%) | 7 | 7 | 7 | 7 | 7 | 7 | 7 |
| Contact Treatment | stage (before/after treatment for formation of height differences | before | before | before | before | before | before | before |
| | temperature (°C) | 25 | 25 | 25 | 25 | 25 | 25 | 25 |
| | time (sec) | 60 | 60 | 60 | 60 | 60 | 60 | 60 |
| Drying | temperature (°C) | 80 | 80 | 80 | 80 | 110 | 140 | 80 |
| | time (min) | 5.0 | 5.0 | 5.0 | 5.0 | 5.0 | 5.0 | 5.0 |
| | water content of membrane (%) | 4.7 | 4.9 | 4.9 | 4.2 | 4.2 | 4.2 | 4.2 |
| | weight ratio of hydrophilic molecules to bone-dry separation membrane (%) | 6.3 | 6.3 | 6.4 | 6.4 | 6.4 | 6.2 | 6.3 |
| Feed side Surface | method for formation of height differences | - | embossing | - | embossing | - | embossing | - |
| | emboss pattern | - | net-like | - | net-like | - | net-like | - |
| | embossing temperature (°C) | - | 130 | - | 130 | - | 130 | - |
| | linear pressure (kg/cm) | - | 60 | - | 60 | - | 60 | - |
| | spacer | net | - | net | - | net | - | net |
| | height difference ($\mu$m) | - | 400 | - | 400 | - | 400 | - |
| | groove width (mm) | - | 1 | - | 1 | - | 1 | - |
| | pitch (mm) | - | 3 | - | 3 | - | 3 | - |
| | convex surface ratio (%) | - | 65 | - | 65 | - | 65 | - |

(continued)

| | | Example 8 | Example 9 | Example 10 | Example 11 | Example 12 | Example 13 | Example 14 |
|---|---|---|---|---|---|---|---|---|
| Permeate-Side Surface | spacer | - | - | - | - | - | - | - |
| | method for formation of height differences | hot-melt | hot-melt | hot-melt | hot-melt | hot-melt | hot-melt | hot-melt |
| | height difference (μm) | 230 | 230 | 230 | 230 | 230 | 230 | 230 |
| | groove width (mm) | 1 | 1 | 1 | 1 | 1 | 1 | 1 |
| | pitch (mm) | 3 | 3 | 3 | 3 | 3 | 3 | 3 |
| | convex surface ratio (%) | 65 | 65 | 65 | 65 | 65 | 65 | 65 |
| Surface defect ratio (%) | | 0.37 | 0.71 | 0.36 | 0.71 | 0.40 | 0.80 | 0.43 |
| Element Performance (with no drying treatment) | water production amount ($m^3$/day) | 41.7 | | | | | | |
| | salt removal ratio (%) | 98.0 | | | | | | |
| Element Performance (after drying treatment) | water production amount ($m^3$/day) | 36.9 | 37.5 | 37.1 | 35.2 | 33.7 | 37.0 | 33.6 |
| | salt removal ratio (%) | 97.6 | 96.7 | 97.1 | 97.1 | 97.3 | 96.7 | 96.9 |
| | water repermeability (%) | 87.9 | 89.3 | 88.3 | 83.8 | 80.2 | 88.1 | 80.0 |
| | recovery ratio (%) | 99.4 | 99.1 | 99.3 | 99.1 | 99.5 | 98.9 | 99.1 |
| | water production amount change before and after chemical treatment (%) | 2.5 | 5.0 | 2.4 | 4.5 | 2.2 | 5.5 | 4.0 |

Table 3

| | | Example 15 | Example 16 | Example 17 | Example 18 | Example 19 |
|---|---|---|---|---|---|---|
| Hydrophilic Molecules | compound | diethylene glycol | diethylene glycol | polyglycerin (20-mer) | polyglycerin (20-mer) | polyglycerin (20-mer) |
| | solvent | water | water | water | water | water |
| | concentration (%) | 7 | 7 | 3 | 30 | 7 |
| Contact Treatment | stage (before/ after treatment for formation of height differences | before | before | before | before | before |
| | temperature (°C) | 25 | 25 | 25 | 25 | 25 |
| | time (sec) | 60 | 60 | 8 | 180 | 60 |
| Drying | temperature (°C) | 80 | 80 | 80 | 80 | 80 |
| | time (min) | 5.0 | 5.0 | 5.0 | 5.0 | 5.0 |
| | water content of membrane (%) | 4.1 | 4.1 | 4.9 | 5.3 | 5.0 |
| | weight ratio of hydrophilic molecules to bone-dry separation membrane (%) | 5.9 | 6.2 | 0.3 | 39.6 | 6.3 |
| Feed side Surface | method for formation of height differences | embossing | - | embossing | embossing | embossing |
| | emboss pattern | net-like | - | net-like | net-like | net-like |
| | embossing temperature (°C) | 130 | - | 130 | 130 | 130 |
| | linear pressure (kg/cm) | 60 | - | 60 | 60 | 60 |
| | spacer | - | net | - | - | - |
| | height difference (μm) | 400 | - | 400 | 400 | 400 |
| | groove width (mm) | 1 | - | 1 | 1 | 1 |
| | pitch (mm) | 3 | - | 3 | 3 | 3 |
| | convex surface ratio (%) | 65 | - | 65 | 65 | 65 |

(continued)

| | | Example 15 | Example 16 | Example 17 | Example 18 | Example 19 |
|---|---|---|---|---|---|---|
| Permeate-Side Surface | spacer | - | - | - | - | - |
| | method for formation of height differences | hot-melt | hot-melt | hot-melt | hot-melt | hot-melt |
| | height difference (μm) | 230 | 230 | 230 | 230 | 230 |
| | groove width (mm) | 1 | 1 | 1 | 1 | 1 |
| | pitch (mm) | 3 | 3 | 3 | 3 | 3 |
| | convex surface ratio (%) | 65 | 65 | 65 | 65 | 65 |
| Surface defect ratio (%) | | 0.78 | 0.50 | 0.75 | 0.34 | 0.65 |
| Element Performance (with no drying treatment) | water production amount ($m^3$/day) | 41.7 | | | | |
| | salt removal ratio (%) | 98.0 | | | | |
| Element Performance (after drying treatment) | water production amount ($m^3$/day) | 36.2 | 34.9 | 34.6 | 36.6 | 37.7 |
| | salt removal ratio (%) | 96.9 | 97.3 | 97.3 | 97.4 | 97.3 |
| | water repermeability (%) | 86.2 | 83.1 | 82.4 | 87.1 | 89.8 |
| | recovery ratio (%) | 99.0 | 99.1 | 98.8 | 99.1 | 99.1 |
| | water production amount change before and after chemical treatment (%) | 4.8 | 3.7 | 2.0 | 1.8 | 4.0 |

Table 4

| | | Comparative Example 1 | Comparative Example 2 | Comparative Example 3 | Comparative Example 4 | Comparative Example 5 |
|---|---|---|---|---|---|---|
| Hydrophilic Molecules | compound | - | - | - | polyglycerin (20-mer) | polyglycerin (20-mer) |
| | solvent | - | - | - | water | water |
| | concentration (%) | - | - | - | 2 | 42 |

(continued)

| | | Comparative Example 1 | Comparative Example 2 | Comparative Example 3 | Comparative Example 4 | Comparative Example 5 |
|---|---|---|---|---|---|---|
| Contact Treatment | stage (before/ after treatment for formation of height differences | - | - | - | before | before |
| | temperature (°C) | - | - | - | 25 | 25 |
| | time (sec) | - | - | - | 1 | 200 |
| Drying | temperature (°C) | - | 80 | - | 80 | 80 |
| | time (min) | - | 5.0 | - | 5.0 | 5.0 |
| | water content of membrane (%) | 51.2 | 5.0 | 51.2 | 5.0 | 5.0 |
| | weight ratio of hydrophilic molecules to bone-dry separation membrane (%) | - | - | - | 0.05 | 48.9 |
| Feed side Surface | method for formation of height differences | embossing | embossing | embossing | embossing | embossing |
| | emboss pattern | net-like | net-like | net-like | net-like | net-like |
| | embossing temperature (°C) | 130 | 130 | 130 | 130 | 130 |
| | linear pressure (kg/cm) | 60 | 60 | 60 | 60 | 60 |
| | spacer | - | - | - | - | - |
| | height difference (μm) | 400 | 400 | 400 | 400 | 400 |
| | groove width (mm) | 1 | 1 | 1 | 1 | 1 |
| | pitch (mm) | 3 | 3 | 3 | 3 | 3 |
| | convex surface ratio (%) | 65 | 65 | 65 | 65 | 65 |

(continued)

| | | Comparative Example 1 | Comparative Example 2 | Comparative Example 3 | Comparative Example 4 | Comparative Example 5 |
|---|---|---|---|---|---|---|
| Permeate-Side Surface | spacer | - | - | tricot | - | - |
| | method for formation of height differences | hot-melt | hot-melt | - | hot-melt | hot-melt |
| | height difference (μm) | 230 | 230 | - | 230 | 230 |
| | groove width (mm) | 1 | 1 | - | 1 | 1 |
| | pitch (mm) | 3 | 3 | - | 3 | 3 |
| | convexsurface ratio (%) | 65 | 65 | - | 65 | 65 |
| Surface defect ratio (%) | | 1.51 | 1.49 | 1.40 | 1.03 | 1.30 |
| Element Performance (with no drying treatment) | water production amount ($m^3$/day) | 41.7 | | | | |
| | salt removal ratio (%) | 98.0 | | | | |
| Element Performance (after drying treatment) | water production amount ($m^3$/day) | 43.6 | 11.8 | 43.3 | 25.4 | 40.2 |
| | salt removal ratio (%) | 93.3 | 94.1 | 94.5 | 95.4 | 96.0 |
| | water repermeability (%) | - | 28.1 | - | 60.5 | 95.7 |
| | recovery ratio (%) | 94.2 | 94.9 | 95.1 | 95.0 | 95.4 |
| | water production amount change before and after chemical treatment (%) | 15.8 | 15.1 | 12.4 | 8.9 | 5.5 |

Table 5

| | | Example 20 | Example 21 | Example 22 | Example 23 | Example 24 | Example 25 |
|---|---|---|---|---|---|---|---|
| Functional Group Concentration | carboxyl group | 0.001 | 0.001 | 0.010 | 0.025 | 0.001 | 0.053 |
| | secondary amine | 0.211 | 0.211 | 0.222 | 0.245 | 0.154 | 0.143 |
| | hydroxyl group + primary amine | 0.294 | 0.294 | 0.434 | 0.531 | 0.177 | 0.107 |
| | ether group | 0.118 | 0.118 | 0.038 | 0.056 | 0.033 | 0.001 |
| | total of hydrophilic groups | 0.412 | 0.412 | 0.473 | 0.587 | 0.210 | 0.108 |
| Drying | temperature (°C) | 80 | 80 | 80 | 80 | 80 | 80 |
| | time (min) | 3.0 | 3.0 | 3.0 | 3.0 | 3.0 | 3.0 |
| | water content of membrane (%) | 4.2 | 4.2 | 4.6 | 5.1 | 4.9 | 4 |
| | weight ratio of hydrophilic molecules to bone-dry separation membrane (%) | 6.4 | 6.4 | 6.6 | 6.9 | 5.5 | 4.5 |
| Feed side Surface | method for formation of height differences | embossing | - | embossing | embossing | embossing | embossing |
| | emboss pattern | net-like | - | net-like | net-like | net-like | net-like |
| | embossing temperature (°C) | 110 | - | 110 | 110 | 110 | 110 |
| | linear pressure (kg/cm) | 40 | - | 40 | 40 | 40 | 40 |
| | spacer | - | net | - | - | - | - |
| | height difference (μm) | 150 | - | 150 | 150 | 150 | 150 |
| | groove width (mm) | 1 | - | 1 | 1 | 1 | 1 |
| | pitch (mm) | 3 | | 3 | - 3 | 3 | 3 |
| | convex surface ratio (%) | 65 | - | 65 | 65 | 65 | 65 |

(continued)

| | | Example 20 | Example 21 | Example 22 | Example 23 | Example 24 | Example 25 |
|---|---|---|---|---|---|---|---|
| Permeate-Side Surface | spacer | tricot | - | tricot | tricot | tricot | tricot |
| | method for formation of height differences | - | hot-melt | - | - | - | - |
| | height difference (μm) | - | 230 | - | - | - | - |
| | groove width (mm) | - | 1 | - | - | - | - |
| | pitch (mm) | - | 3 | - | - | - | - |
| | convex surface ratio (%) | - | 65 | - | - | - | - |
| Surface defect ratio (%) | | 0.65 | 0.30 | 0.55 | 0.50 | 0.71 | 1.43 |
| Element Performance (with no drying treatment) | water production amount ($m^3$/day) | 46.6 | | | | | |
| | salt removal ratio (%) | 98.2 | | | | | |
| Element Performance | water production amount ($m^3$/day) | 45.2 | 43.0 | 46.1 | 46.4 | 43.5 | 44.8 |
| | salt removal ratio (%) | 97.8 | 97.9 | 97.0 | 97.0 | 97.7 | 94.6 |
| | water repermeability (%) | 97.0 | 92.3 | 98.9 | 99.6 | 93.3 | 96.1 |
| | recovery ratio (%) | 97.5 | 98.2 | 97.7 | 97.9 | 97.3 | 94.9 |
| | water production amount change before and after chemical treatment (%) | 2.0 | 1.6 | 1.8 | 1.7 | 2.6 | 15.1 |

INDUSTRIAL APPLICABILITY

In particular, the separation membrane element of the invention is favorably used for desalting of brine water and seawater.

DESCRIPTION OF REFERENCE NUMERALS AND SIGNS

| | |
|---|---|
| 1, 11 to 16, 2 | Separation Membrane |
| 100 | Separation Membrane Element |
| 101 | Raw Fluid |
| 102 | Permeated Fluid |
| 103 | Concentrated Fluid |
| 121 | Separation Membrane Body |
| 22 to 26 | Discontinuous Member |
| 28 | Wound Body |
| 3 | Net |
| 4 | Tricot |
| 6 | Water-Collecting Tube |
| 7 | First End Plate |
| 8 | Second End Plate |
| H | Height Difference |

**Claims**

1. A separation membrane containing hydrophilic molecules and having, as formed on at least one surface of a feed side and a permeate side thereof, a height difference of from 80 μm to 2000 μm,
wherein a weight of the hydrophilic molecules in a bone-dry separation membrane is from 0.1 % to 40% based on a weight of the bone-dry separation membrane from which the weight of the hydrophilic molecules has been subtracted.

2. The separation membrane according to claim 1, wherein the hydrophilic molecules are a sugar chain compound or polyalcohols.

3. The separation membrane according to claim 2, wherein the sugar chain compound is at least one sugar group selected from monoses, bioses and trioses.

4. The separation membrane according to claim 2, wherein the sugar chain compound is at least one compound selected from glucose, sucrose, maltose, lactose, trehalose and raffinose.

5. The separation membrane according to claim 2, wherein the polyalcohol is at least one compound selected from polyvinyl alcohol, glycols, glycerin and polyglycerin.

6. The separation membrane according to any of claims 1 to 5, wherein a protective layer having at least one hydrophilic group selected from the group consisting of a secondary amine, a hydroxyl group and an ether group is provided on the surface of the feed side of the separation membrane, and
as measured on the feed side of the separation membrane through electron spectroscopy for chemical analysis, a hydroxyl group concentration is within a range of from 0.2 to 0.6 and a carboxyl group concentration is within a range of from 0.001 to 0.03.

**7.** The separation membrane according to claim 6, wherein the protective layer contains, as a main ingredient thereof, a crosslinked product of a water-soluble organic polymer having a hydrophilic group.

**8.** The separation membrane according to claim 7, wherein the water-soluble organic polymer is at least one compound selected from the group consisting of polyvinyl alcohol, partially-saponified product of polyvinyl acetate, polyvinyl pyrrolidone, polyacrylic acid, polyallylamine, polyethyleneimine, polyepiaminohydrin, amine-modified polyepichlorohydrin, polyacrylamide, polyacrylic acid amide, polyethylene glycol and cellulose derivatives.

**9.** The separation membrane according to any of claims 1 to 8, wherein the separation membrane is a composite separation membrane comprising a substrate, a porous supporting layer and a separation function layer.

**10.** The separation membrane according to claim 9, wherein the separation function layer contains a crosslinked polyamide as a main ingredient thereof.

**11.** The separation membrane according to claim 9 or 10, wherein the substrate is a long-fiber nonwoven fabric.

**12.** The separation membrane according to claim 11, wherein fibers in a surface layer of the long-fiber nonwoven fabric on a side opposite to the porous supporting layer have a higher longitudinal orientation than fibers in a surface layer of the long-fiber nonwoven fabric on a porous supporting layer side.

**13.** A separation membrane element comprising the separation membrane according to any of claims 1 to 12.

**14.** A method for producing a separation membrane, the method comprising:

a step of imparting a height difference of from 80 $\mu$m to 1000 $\mu$m to at least one surface of a feed side and a permeate side of a separation membrane; and
a step of bringing the separation membrane into contact with hydrophilic molecules so that a weight of the hydrophilic molecules in a bone-dry separation membrane is from 0.1 % to 40% based on a weight of the bone-dry separation membrane from which the weight of the hydrophilic molecules has been subtracted.

**15.** The method for producing a separation membrane according to claim 14, wherein the step of imparting a height difference to the separation membrane is carried out after the step of bringing the separation membrane into contact with hydrophilic molecules.

**16.** The method for producing a separation membrane according to claim 14, wherein the step of imparting a height difference to the separation membrane is carried out before the step of bringing the separation membrane into contact with hydrophilic molecules.

**17.** The method for producing a separation membrane according to any of claims 14 to 16, wherein the step of bringing the separation membrane into contact with hydrophilic molecules comprises applying an aqueous solution containing hydrophilic molecules to the separation membrane.

**18.** The method for producing a separation membrane according to any of claims 14 to 17, wherein at least one of a sugar chain compound and polyalcohols is used as the hydrophilic molecules.

**19.** The method for producing a separation membrane according to any of claims 14 to 16, wherein the step of bringing the separation membrane into contact with hydrophilic molecules comprises applying an aqueous solution of a water-soluble organic polymer to the separation membrane and crosslinking the water-soluble organic polymer to form a water-insoluble protective layer.

**20.** The method for producing a separation membrane according to any of claims 14 to 19, wherein in the step of bringing the separation membrane into contact with hydrophilic molecules and the step of imparting a height difference to the separation membrane, a composite separation membrane comprising a substrate, a porous supporting layer and a separation function layer is used.

*Fig. 1*

1
H

*Fig. 2*

11
H

*Fig. 3*

12
22
H
121

*Fig. 4*

13
23
H
121

*Fig. 5*

14
24
H
121

*Fig. 6*

15
121
25

*Fig. 7*

16
121
26

*Fig. 8*

100
8
28
102
6
103
7
3
103
20
2
4
101
102

**INTERNATIONAL SEARCH REPORT**

International application No. PCT/JP2011/074306

A. CLASSIFICATION OF SUBJECT MATTER
*B01D69/00*(2006.01)i, *B01D69/10*(2006.01)i, *B01D69/12*(2006.01)i, *B01D71/82* (2006.01)i

According to International Patent Classification (IPC) or to both national classification and IPC

B. FIELDS SEARCHED

Minimum documentation searched (classification system followed by classification symbols)
B01D69/00, B01D69/10, B01D69/12, B01D71/82

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-327840 A (Toray Industries, Inc.), 27 November 2001 (27.11.2001), claims 1 to 13; paragraphs [0055] to [0064]; examples (Family: none) | 1-20 |
| Y | JP 2010-099591 A (Nitto Denko Corp.), 06 May 2010 (06.05.2010), claims 3, 4; paragraphs [0011], [0012], [0036] to [0050] (Family: none) | 1-20 |
| Y | JP 2000-117074 A (Saehan Industries Inc.), 25 April 2000 (25.04.2000), claim 2; paragraph [0025]; examples & EP 992277 A1 | 1-4,6-20 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 January, 2012 (11.01.12) | 24 January, 2012 (24.01.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2011/074306

C (Continuation). DOCUMENTS CONSIDERED TO BE RELEVANT

| Category* | Citation of document, with indication, where appropriate, of the relevant passages | Relevant to claim No. |
|---|---|---|
| Y | JP 04-504076 A (Allied-Signal Inc.), 23 July 1992 (23.07.1992), claim 13; example II & DE 68903638 T & AT 82703 T | 1,2,5-20 |
| Y | JP 2009-131840 A (Toray Industries, Inc.), 18 June 2009 (18.06.2009), claims 1 to 7 (Family: none) | 11,12 |
| A | JP 2009-154393 A (SCIVAX Corp.), 16 July 2009 (16.07.2009), claims 1 to 12; paragraph [0015] & US 2011/0024948 A1 & EP 2239127 A1 | 1-20 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006247453 A
- JP 111143811 A
- JP 2010099590 A
- JP 2000117074 A
- JP 2008093543 A
- JP 4414216 B
- JP 4011928 B
- JP 11226366 A


### Non-patent literature cited in the description


- *Journal of Polymer Science,* 1988, vol. 26, 559-572
- *Journal of Adhesion Society of Japan,* 1991, vol. 27 (4